(19) Europäisches Patentamt
European Patent Office
Office européen des brevets

(11) EP 2 161 772 A1

(12) EUROPEAN PATENT APPLICATION
published in accordance with Art. 153(4) EPC

(43) Date of publication:
**10.03.2010 Bulletin 2010/10**

(21) Application number: **08765606.2**

(22) Date of filing: **13.06.2008**

(51) Int Cl.:
***H01M 8/02*** *(2006.01)* ***H01M 4/86*** *(2006.01)*
***H01M 4/88*** *(2006.01)* ***H01M 8/10*** *(2006.01)*

(86) International application number:
**PCT/JP2008/060896**

(87) International publication number:
**WO 2008/153147 (18.12.2008 Gazette 2008/51)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 JP 2007159465**

(71) Applicant: **Sumitomo Chemical Company, Limited**
**Tokyo 104-8260 (JP)**

(72) Inventors:
- **KURITA, Hiroyuki**
**Tsukuba-shi**
**Ibaraki 305-0045 (JP)**
- **SAITO, Shin**
**Tsukuba-shi**
**Ibaraki 305-0822 (JP)**
- **KURODA, Ryuma**
**Komatsu-shi**
**Ishikawa 932-0832 (JP)**
- **SAKAI, Taiga**
**Tsukuba-shi**
**Ibaraki 305-0821 (JP)**

(74) Representative: **Vossius & Partner**
**Siebertstraße 4**
**81675 München (DE)**

# (54) ASSEMBLY OF MEMBRANE, ELECTRODE, GAS DIFFUSION LAYER AND GASKET, METHOD FOR PRODUCING THE SAME, AND SOLID POLYMER FUEL CELL

(57) A method for producing a membrane-electrode-gas diffusion layer-gasket assembly 30, having a cathode sealing step in which a cathode side gasket 6 is formed on the edges of a cathode side gas diffusion layer 4 and cathode catalyst layer 2, and an anode sealing step in which an anode side gasket 7 is formed on the edges of an anode side gas diffusion layer 5 and anode catalyst layer 3, in a membrane-electrode-gas diffusion layer assembly 20, wherein the thickness C1 of the cathode side gasket 6 used in the cathode sealing step is in the following relationship with A1 as the thickness of the cathode catalyst layer 2 and B1 as the thickness of the cathode side gas diffusion layer 4.

$$(A1+B1)/C1 \geq 1.2 \qquad (1)$$

***Fig.2***

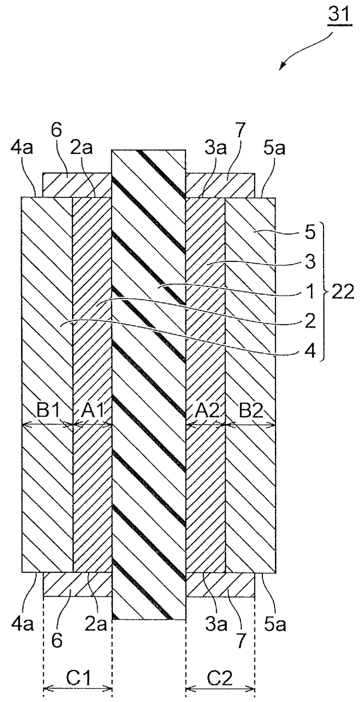


EP 2 161 772 A1

## Description

## Technical Field

The present invention relates to a membrane-electrode-gas diffusion layer-gasket assembly and to a method for producing it, as well as to a solid polymer fuel cell comprising the membrane-electrode-gas diffusion layer-gasket assembly.

## Background Art

Polymer electrolyte membranes employing polymers with proton conductivity are used as electrolyte membranes for primary batteries, secondary batteries, solid polymer fuel cells and the like. The main polymer electrolyte membranes currently being investigated are fluorine-based polymer electrolytes, including Nafion$^{R}$. However, polymer electrolyte membranes obtained from fluorine-based polymer electrolytes (fluorine-based electrolyte membranes) are problematic because of their load on the environment, their exceedingly high cost, their low heat resistance and membrane strength, their lack of practical strength without some sort of reinforcement, and the like.

In light of these circumstances, polymer electrolytes that are inexpensive and have excellent properties and can substitute for the aforementioned fluorine-based polymer electrolytes have been actively developed in recent years, and particular focus has been on polymer electrolyte membranes that are hydrocarbon-based (hydrocarbon-based polymer electrolyte membranes) without fluorine atoms as main constituent components of the polymer electrolyte. Hydrocarbon-based polymer electrolyte membranes are considered to be more practical than fluorine-based polymer electrolyte membranes because they can be inexpensively produced, they have high heat resistance to withstand operation at high temperature, they can be easily recycled and the like, and therefore improvements in ionic conductivity and durability of such hydrocarbon-based electrolyte membranes are being pursued in order to achieve enhanced electric power generation properties for solid polymer fuel cells.

Solid polymer fuel cells comprise a membrane-electrode assembly (hereinafter also referred to as "MEA") obtained by forming electrodes known as catalyst layers, each comprising a catalyst that promotes oxidation-reduction reaction between a fuel gas such as hydrogen and an oxidant gas such as oxygen, on both sides of a polymer electrolyte membrane, a membrane-electrode-gas diffusion layer assembly (hereinafter also referred to as "MEGA") obtained by further forming gas diffusion layers on the outsides of the catalyst layers (the sides opposite the contact surfaces with the polymer electrolyte membrane) for efficient supply of a source gas to the catalyst layer, and a membrane-electrode-gas diffusion layer-gasket assembly (hereinafter also referred to as "MEGGA") obtained by further forming a sealing agent (hereinafter referred to as "gasket") in contact with the edges of the catalyst layers and gas diffusion layers. The solid polymer fuel cell also comprises a pair of separators that serve as gas passageways, on the outside of each gas diffusion layer of the MEGGA (the sides of the gas diffusion layers opposite the contact surfaces with the catalyst layers).

Incidentally, it is essential for the hydrocarbon-based polymer electrolyte membrane of a solid polymer fuel cell to be sufficiently humidified in order to maintain the proton conductivity of the hydrocarbon-based polymer electrolyte membrane. During operation of the fuel cell, usually a fuel gas or oxidant gas humidified to the dew point and at approximately the same temperature as the operating temperature of the fuel cell is supplied into the fuel cell. For improved energy efficiency of fuel cells, however, there is a strong desire for fuel cells in which the polymer electrolyte membrane can generate high proton conductivity to maintain a high level of electric power generation, even under low-humidifying conditions without such gas humidification. Polymer electrolyte membranes continue to be improved with the aim of maintaining high electric power generation under low-humidifying conditions, and in recent years there have been attempts to enhance electric power generation performance by improving the properties of MEA catalyst layers. For example, it has been proposed to vary the weight ratio of the catalyst support of the catalyst layer and the polymer electrolyte, in the thickness direction and in-plane direction of the catalyst layer (see Patent document 1, for example), or to provide a water-retaining layer between the catalyst layer and gas diffusion layer (see Patent document 2, for example).

[Patent document 1] Japanese Unexamined Patent Publication No. 2001-319663
[Patent document 2] Japanese Unexamined Patent Publication No. 2002-289230

## Disclosure of the Invention

### Problems to be Solved by the Invention

The techniques mentioned above, however, have still resulted in insufficient electric power generation properties of solid polymer fuel cells, and further improvement is desired. It is therefore an object of the present invention to provide

a solid polymer fuel cell with satisfactorily excellent electric power generation properties, as well as a membrane-electrode-gas diffusion layer-gasket assembly to be used in the solid polymer fuel cell and a method for producing it.

Means for Solving the Problems

The present inventors focused on the structure of the membrane-electrode-gas diffusion layer-gasket assembly in a solid polymer fuel cell and conducted much research on how the sizes of the different structural materials used at different locations in the assembly affect the electric power generation properties. As a result, it was found that the electric power generation properties of a solid polymer fuel cell vary depending on the thicknesses of the gasket, catalyst layer and gas diffusion layer in the membrane-electrode-gas diffusion layer-gasket assembly, and that adjusting their relationship within a fixed range can vastly improve the electric power generation properties of the solid polymer fuel cell.

Specifically, the invention provides a method for producing a membrane-electrode-gas diffusion layer-gasket assembly, comprising a cathode sealing step in which a cathode side gasket is formed on the edges of a cathode side gas diffusion layer and cathode catalyst layer, and an anode sealing step in which an anode side gasket is formed on the edges of the anode side gas diffusion layer and anode catalyst layer, in a membrane-electrode-gas diffusion layer assembly comprising a cathode side gas diffusion layer, cathode catalyst layer, hydrocarbon-based polymer electrolyte membrane, anode catalyst layer and anode side gas diffusion layer laminated in that order, the method being characterized in that the thickness C1 of the cathode side gasket used in the cathode sealing step is in the following relationship with A1 as the thickness of the cathode catalyst layer and B1 as the thickness of the cathode side gas diffusion layer.

$$(A1+B1)/C1 \geq 1.2 \qquad (1)$$

A solid polymer fuel cell employing a membrane-electrode-gas diffusion layer-gasket assembly obtained by this production method exhibits excellent electric power generation properties.

The thickness C1 of the cathode side gasket is the maximum length of the cathode side gasket from the plane containing the bonding surface between the hydrocarbon-based polymer electrolyte membrane and cathode catalyst layer, in the direction of lamination of the cathode side gas diffusion layer, cathode catalyst layer, hydrocarbon-based polymer electrolyte membrane, anode catalyst layer and anode side gas diffusion layer.

The invention also provides a method for producing a membrane-electrode-gas diffusion layer-gasket assembly, comprising a cathode sealing step in which a cathode side gasket is formed on the edges of a cathode side gas diffusion layer and cathode catalyst layer, and an anode sealing step in which an anode side gasket is formed on the edges of the anode side gas diffusion layer and anode catalyst layer, in a membrane-electrode-gas diffusion layer assembly comprising a cathode side gas diffusion layer, cathode catalyst layer, hydrocarbon-based polymer electrolyte membrane, anode catalyst layer and anode side gas diffusion layer laminated in that order, the method being characterized in that the thickness C2 of the anode side gasket used in the anode sealing step is in the following relationship with A2 as the thickness of the anode catalyst layer and B2 as the thickness of the anode side gas diffusion layer.

$$(A2+B2)/C2 \geq 1.2 \qquad (2)$$

The thickness C2 of the anode side gasket is the maximum length of the anode side gasket from the plane containing the bonding surface between the hydrocarbon-based polymer electrolyte membrane and anode catalyst layer, in the direction of lamination of the cathode side gas diffusion layer, cathode catalyst layer, hydrocarbon-based polymer electrolyte membrane, anode catalyst layer and anode side gas diffusion layer.

A fuel cell employing a membrane-electrode-gas diffusion layer-gasket assembly obtained by this production method exhibits sufficiently excellent electric power generation properties.

The present inventors have thus discovered a membrane-electrode-gas diffusion layer-gasket assembly that can yield a fuel cell with very excellent electric power generation performance, by limiting the thicknesses of the catalyst layers, gas diffusion layers and gaskets for the cathode side and anode side of the fuel cell to satisfy formula (1) or formula (2) above. A membrane-electrode-gas diffusion layer-gasket assembly employing both a cathode side gasket satisfying formula (1) in the cathode sealing step and an anode side gasket satisfying formula (2) in the anode sealing step is particularly preferred in order to realize a fuel cell with even more excellent electric power generation properties.

According to the invention, the hydrocarbon-based polymer electrolyte membrane used in the membrane-electrode-gas diffusion layer-gasket assembly preferably comprises a block copolymer that includes a block composed of a repeating unit with an ion-exchange group, and a block composed of a repeating unit with essentially no ion-exchange

groups. Including such a block copolymer will yield a hydrocarbon-based polymer electrolyte membrane that contributes to a higher level of electric power generation performance, has a high level of proton conductivity, and exhibits very excellent water resistance. The term "water resistance" used here means extremely low dimensional variation of the polymer electrolyte membrane due to moisture absorption and swelling. Thus, a polymer electrolyte membrane exhibiting a high level of water resistance has the advantage of minimal mechanical deterioration of the membrane since it undergoes little dimensional variation even when the moisture content of the membrane has varied during operation and stopping of the fuel cell. The phrase "repeating unit with essentially no ion-exchange groups" allows for a repeating unit with a few ion-exchange groups so long as the effect of the invention is not impeded.

According to the invention, the cathode catalyst layer and/or anode catalyst layer preferably contain a hydrocarbon-based polymer electrolyte. If the catalyst layers contain a hydrocarbon-based polymer electrolyte it will be possible to further improve the bonding property with the hydrocarbon-based polymer electrolyte membrane.

Also according to the invention, the cathode catalyst layer and/or anode catalyst layer are preferably layers formed using a catalyst ink comprising a catalyst substance, a solvent and a polymer electrolyte, wherein at least a portion of the polymer electrolyte particles are present in a dispersed state in the solvent. Such a catalyst ink can form a catalyst layer by direct coating onto the polymer electrolyte membrane, and the catalyst layer formed by direct coating can exhibit a firm bonding property with the hydrocarbon-based polymer electrolyte membrane. The term "catalyst ink" is widely used in fuel cell-related fields and refers to a liquid composition used to form a catalyst layer.

According to the invention, the cathode catalyst layer and/or anode catalyst layer are preferably layers formed by directly coating the catalyst ink onto the hydrocarbon polymer electrolyte membrane by a spray method. This will allow formation of a catalyst layer with a firm bonding property for the hydrocarbon-based polymer electrolyte membrane, with good reproducibility by a very simple procedure.

According to the invention there is provided a membrane-electrode-gas diffusion layer-gasket assembly obtained by the aforementioned method for producing a membrane-electrode-gas diffusion layer-gasket assembly. Since the membrane-electrode-gas diffusion layer-gasket assembly is obtained by the production method characterized as described above, the membrane-electrode-gas diffusion layer-gasket assembly can be used to obtain a solid polymer fuel cell with sufficiently excellent electric power generation properties.

According to the invention, the cathode catalyst layer and/or anode catalyst layer preferably contain a hydrocarbon-based polymer electrolyte. This can result in a more satisfactory bonding property between the hydrocarbon-based polymer electrolyte membrane and the cathode catalyst layer and anode catalyst layer.

There is also provided according to the invention a solid polymer fuel cell comprising the membrane-electrode-gas diffusion layer-gasket assembly described above. Such a solid polymer fuel cell has sufficiently excellent electric power generation properties because it comprises a membrane-electrode-gas diffusion layer-gasket assembly characterized as described above.

According to the invention, the method preferably further comprises a cathode side gasket-bonding step wherein the cathode side gasket provided in the cathode sealing step is pressed in the direction of lamination and contact bonded with the hydrocarbon-based polymer electrolyte membrane. This production method can improve the bonding property between the hydrocarbon-based polymer electrolyte membrane and cathode side gasket while also further facilitating assembly of the solid polymer fuel cell, and is therefore highly useful for producing a membrane-electrode-gas diffusion layer-gasket assembly satisfying formula (1) above.

According to the invention, the method preferably further comprises an anode side gasket-bonding step wherein the anode side gasket provided in the anode sealing step is pressed in the direction of lamination and contact bonded with the hydrocarbon-based polymer electrolyte membrane. This production method can improve the bonding property between the hydrocarbon-based polymer electrolyte membrane and anode side gasket while also further facilitating assembly of the solid polymer fuel cell, and is therefore highly useful for producing a membrane-electrode-gas diffusion layer-gasket assembly satisfying formula (2) above.

According to the invention, the method preferably comprises both a cathode side gasket-bonding step wherein the cathode side gasket provided in the cathode sealing step is pressed in the direction of lamination and contact bonded with the hydrocarbon-based polymer electrolyte membrane, and an anode side gasket-bonding step wherein the anode side gasket provided in the anode sealing step is pressed in the direction of lamination and contact bonded with the hydrocarbon-based polymer electrolyte membrane. This production method can further improve the bonding property between the hydrocarbon-based polymer electrolyte membrane and both the anode side gasket and cathode side gasket while also even further facilitating assembly of the solid polymer fuel cell, and is therefore highly useful for producing a membrane-electrode-gas diffusion layer-gasket assembly satisfying at least one of formula (1) and (2) above.

According to another aspect, the invention provides a method for improving the durability of a membrane-electrode-gas diffusion layer-gasket assembly, characterized in that in a cathode sealing step in which a cathode side gasket is formed on the edges of a cathode side gas diffusion layer and cathode catalyst layer, the thickness C1 of the cathode side gasket satisfies the relationship of formula (1) above where A1 is the thickness of the cathode catalyst layer and B1 is the thickness of the cathode side gas diffusion layer, and in an anode sealing step in which an anode

side gasket is formed on the edges of the anode side gas diffusion layer and anode catalyst layer, the thickness C2 of the anode side gasket satisfies the relationship of formula (2) above where A2 is the thickness of the anode catalyst layer and B2 is the thickness of the anode side gas diffusion layer, in a membrane-electrode-gas diffusion layer assembly comprising a cathode side gas diffusion layer, cathode catalyst layer, hydrocarbon-based polymer electrolyte membrane, anode catalyst layer and anode side gas diffusion layer laminated in that order. Using a membrane-electrode-gas diffusion layer assembly sealed with a cathode side gasket and anode side gasket in such a manner that the relational expressions of formula (1) and formula (2) are satisfied can inhibit deterioration (low molecularization) of the polymer electrolyte membrane resulting from operation of the solid polymer fuel cell, and can improve the durability of the membrane-electrode-gas diffusion layer-gasket assembly.

## Effect of the Invention

According to the invention it is possible to provide a solid polymer fuel cell with satisfactorily excellent electric power generation properties and sufficiently excellent durability, as well as a membrane-electrode-gas diffusion layer-gasket assembly to be used in the solid polymer fuel cell and a method for producing it.

## Brief Description of the Drawings

Fig. 1 is a schematic cross-sectional view of a solid polymer fuel cell comprising a membrane-electrode-gas diffusion layer-gasket assembly according to a first embodiment of the invention.
Fig. 2 is a schematic cross-sectional view of a laminated body used to produce the membrane-electrode-gas diffusion layer-gasket assembly of Fig. 1.
Fig. 3 is a schematic cross-sectional view of a laminated body used as a modified example of the first embodiment.
Fig. 4 is a schematic cross-sectional view of a solid polymer fuel cell comprising a membrane-electrode-gas diffusion layer-gasket assembly according to a second embodiment of the invention.
Fig. 5 is a schematic cross-sectional view of a laminated body used to produce the membrane-electrode-gas diffusion layer-gasket assembly of Fig. 4.
Fig. 6 is a structural schematic view of a solid polymer fuel cell according to a third embodiment of the invention.

<u>Explanation of Symbols</u>

1: Hydrocarbon-based polymer electrolyte membrane, 2: cathode catalyst layer, 3: anode catalyst layer, 4: cathode side gas diffusion layer, 5: anode side gas diffusion layer, 6, 16, 61: cathode side gaskets (gaskets), 7, 17, 71: anode side gaskets (gaskets), 8: cathode side separator (separator), 9: anode side separator (separator), 10,15: membrane-electrode assemblies, 14a, 14b: manifolds, 20, 22, 25, 27: membrane-electrode-gas diffusion layer assemblies, 30, 35: membrane-electrode-gas diffusion layer-gasket assemblies, 31, 32, 33: laminated bodies, 40, 42: solid polymer fuel cells.

## Best Mode for Carrying Out the Invention

Preferred embodiments of the invention will now be explained with reference to the accompanying drawings where necessary. Throughout the explanation of the drawings, identical or corresponding elements will be referred to by like reference numerals and will be explained only once.

(First embodiment)

Fig. 1 is a schematic cross-sectional view of a solid polymer fuel cell comprising a membrane-electrode-gas diffusion layer-gasket assembly according to a first embodiment of the invention. As shown in Fig. 1, the membrane-electrode assembly 10 comprises a cathode catalyst layer 2 on one main side of the hydrocarbon-based polymer electrolyte membrane 1, and an anode catalyst layer 3 on the other main side of the hydrocarbon-based polymer electrolyte membrane 1. That is, the cathode catalyst layer 2 and anode catalyst layer 3 are laminated sandwiching the hydrocarbon-based polymer electrolyte membrane 1 to construct the membrane-electrode assembly 10.

In the membrane-electrode assembly 10, a cathode side gas diffusion layer 4 is formed in contact with the main side of the cathode catalyst layer 2 opposite the contact surface side of the hydrocarbon-based polymer electrolyte membrane 1, and an anode side gas diffusion layer 5 is formed in contact with the main side of the anode catalyst layer 3 opposite the contact surface side of the hydrocarbon-based polymer electrolyte membrane 1. As a result, the membrane-electrode-gas diffusion layer assembly 20 has a construction comprising the membrane-electrode assembly 10 and a pair of gas diffusion layers sandwiching the membrane-electrode assembly 10.

On the membrane-electrode-gas diffusion layer assembly 20 there are formed a cathode side gasket 6 covering the edges 2a, 4a of the cathode catalyst layer 2 and cathode side gas diffusion layer 4, and an anode side gasket 7 covering the edges 3a, 5a of the anode catalyst layer 3 and anode side gas diffusion layer 5. A membrane-electrode-gas diffusion layer-gasket assembly 30 is thus constructed.

A solid polymer fuel cell 40 is also constructed by providing a pair of separators sandwiching the membrane-electrode-gas diffusion layer-gasket assembly 30. That is, the solid polymer fuel cell 40 comprises a cathode side separator 8 in contact with the main side of the cathode side gas diffusion layer 4, and an anode side separator 9 in contact with the main side of the anode side gas diffusion layer 5. Throughout the present specification, "main side" refers to a side orthogonal to the direction of lamination of the membrane-electrode assembly 10.

The hydrocarbon-based polymer electrolyte membrane, catalyst layer, gas diffusion layer and gasket composing the MEGGA will now be explained in detail.

The hydrocarbon-based polymer electrolyte membrane 1 may contain either a hydrocarbon-based polymer electrolyte with acidic groups or a hydrocarbon-based polymer electrolyte with basic groups. It preferably contains a hydrocarbon-based polymer electrolyte with acidic groups, in order to obtain a solid polymer fuel cell with more excellent electric power generation properties. As examples of acidic groups there may be mentioned sulfonic acid ($-SO_3H$), carboxyl (-COOH), phosphonic acid ($-PO_3H_2$), phosphoric acid ($=OPO_3H_2$), sulfonylamide ($-SO_2NHSO_2-$) and phenolic hydroxyl groups. Sulfonic acid and phosphonic acid groups are preferred among these, with sulfonic acid groups being more preferred.

As typical examples of hydrocarbon-based polymer electrolytes with acidic groups, there may be mentioned (A) hydrocarbon-based polymer electrolytes having a sulfonic acid and/or phosphonic acid group introduced into a hydrocarbon-based polymer comprising an aliphatic hydrocarbon in the main chain, (B) hydrocarbon-based polymer electrolytes having a sulfonic acid and/or phosphonic acid group introduced into a polymer having an aromatic ring in the main chain, (C) hydrocarbon-based polymer electrolytes having a sulfonic acid and/or phosphonic acid group introduced into a polymer comprising an aliphatic hydrocarbon and an inorganic unit structure such as siloxane or phosphazene in the main chain, (D) hydrocarbon-based polymer electrolytes having a sulfonic acid and/or phosphonic acid group introduced into a copolymer comprising a two or more types of repeating units selected from among repeating units composing a polymer of (A)-(C) above before introduction of the sulfonic acid and/or phosphonic acid group, (E) hydrocarbon-based polymer electrolytes having an acidic compound such as sulfuric acid or phosphoric acid introduced by ionic bonding into a hydrocarbon-based polymer comprising a nitrogen atom on the main chain or a side chain, and the like.

As examples of the (A) hydrocarbon-based polymer electrolytes there may be mentioned polyvinylsulfonic acid, polystyrenesulfonic acid and poly($\alpha$-methylstyrene)sulfonic acid.

The (B) hydrocarbon-based polymer electrolytes may have the main chain bonded via a heteroatom such as an oxygen atom, and as examples there may be mentioned homopolymers of polyarylene, polyetheretherketone, polysulfone, polyethersulfone, poly(arylene ether), polyimide, poly((4-phenoxybenzoyl)-1,4-phenylene), polyphenylene sulfide, polyphenylquinoxalene and the like having sulfonic acid groups introduced therein, sulfoarylated polybenzimidazoles, sulfoalkylated polybenzimidazoles, phosphoalkylated polybenzimidazoles (see Japanese Unexamined Patent Publication HEI No. 9-110982, for example) and phosphonated poly(phenylene ether) (see J. Appl. Polym. Sci., 18, p.69(1974), for example).

As examples of the (C) hydrocarbon-based polymer electrolytes there may be mentioned polyphosphazenes with sulfonic acid groups introduced therein or polysiloxanes with phosphonic acid groups, which can be easily produced (see Polymer Prep., 41, No.1, p.70(2000), for example).

As the (D) hydrocarbon-based polymer electrolytes there may be mentioned random copolymers with sulfonic acid and/or phosphonic acid groups introduced therein, alternating copolymers with sulfonic acid and/or phosphonic acid groups introduced therein, and block copolymers with sulfonic acid and/or phosphonic acid groups introduced therein. As examples of random copolymers with sulfonic acid groups introduced therein there may be mentioned the sulfonated polyethersulfone polymers mentioned in Japanese Unexamined Patent Publication HEI No. 11-116679.

As examples of the (E) hydrocarbon-based polymer electrolytes there may be mentioned the phosphoric acid-containing polybenzimidazoles mentioned in Japanese Patent Public Inspection HEI No. 11-503262, and the like.

The hydrocarbon-based polymer electrolytes of (B) and (D) are preferred among those mentioned above from the viewpoint of achieving both high electric power generation properties and durability for solid polymer fuel cells.

Of the examples mentioned above, the hydrocarbon-based polymer electrolyte membrane preferably comprises an aromatic-based polymer electrolyte from the viewpoint of heat resistance and easier recycling. The aromatic-based polymer electrolyte is also preferably soluble in solvents. Also preferred are aromatic-based polymer electrolytes that are high molecular compounds having the aromatic ring on the main chain of the polymer chain and with an acidic group on the side chains and/or the main chain.

The acidic groups of such aromatic-based polymer electrolytes may be directly substituted on the aromatic ring on the main chain of the polymer, or they may be bonded to the aromatic ring on the main chain via a linking group, or a combination of the foregoing may be used.

Examples of high molecular compounds with an aromatic ring on the main chain of the polymer chain include those with main chain of divalent aromatic groups linked together as with polyarylene, and those with main chain of divalent aromatic groups linked via divalent groups. As such divalent groups there may be mentioned oxy (-O-), thioxy (-S-), carbonyl, sulfinyl, sulfonyl, amide (-NH-CO- or -CO-NH-), ester (-O-CO- or -CO-O-), carbonic acid ester (-O-CO-O-), approximately C1-4 alkylene, approximately C1-4 fluorine-substituted alkylene, approximately C2-4 alkenylene and approximately C2-4 alkynylene groups. As aromatic groups there may be mentioned aromatic groups such as phenylene, naphthylene, anthracenediyl and fluorenediyl, and aromatic heterocyclic groups such as pyridinediyl, furanediyl, thiophenediyl, imidazolyl, indolediyl and quinoxalinediyl.

The divalent aromatic groups may have substituents in addition to the acidic groups, and as such substituents there may be mentioned C1-20 alkyl, C1-20 alkoxy, C6-20 aryl, C6-20 aryloxy, C2-20 acyl, nitro and halogen atoms. When the aromatic-based polymer electrolyte has a halogen atom as a substituent, or when it has a fluorine-substituted alkylene group as the divalent group linking the aromatic groups, the proportion of halogen atoms is preferably no greater than 15 wt% as the compositional ratio by elemental weight in the aromatic-based polymer electrolyte.

Preferred aromatic-based polymer electrolytes are those that form membranes having both a domain with an acidic group that contributes to proton conductivity and a domain with essentially no ion-exchange groups which contributes to mechanical strength when the aromatic-based polymer electrolytes are used to form membranes, or in other words, those that form membranes with phase separation or microphase separation. A microphase separation structure is a structure composed of a mixture of a microphase (microdomain) wherein the density of block (A) with acidic groups higher than the density of block (B) with essentially no ion-exchange groups and a microphase (microdomain) wherein the density of block (B) with essentially no ion-exchange groups is higher than the density of block (A) with acidic groups, as observed under a transmission electron microscope (TEM), and the domain width of each microdomain structure, i.e. the identity period, is between several nm and several 100 nm. The membrane preferably has a microdomain structure with an identity period of 5 nm-100 nm. As aromatic-based polymer electrolytes that easily produce membranes with such microphase separation structures, there may be mentioned block copolymers or graft copolymers comprising both a block with acidic groups and a block with essentially no ion-exchange groups. These are preferred for use because their different polymer blocks are bonded by chemical bonds, and they readily produce microscopic phase separation on the order of the molecular chain size. Block copolymers are more preferably used.

The "block (A) with acidic groups" for the preferred block copolymers mentioned above is a block with an average of at least 0.5 for the number of ion-exchange groups per repeating unit composing the block (A). The average number of ion-exchange groups per repeating unit composing the block (A) is preferably 1.0 or greater.

The "block (B) with essentially no ion-exchange groups" is a block with an average of less than 0.5 for the number of ion-exchange groups per repeating unit composing the block (B). The average number of ion-exchange groups per repeating unit composing the block (B) is preferably no greater than 0.1 and more preferably no greater than 0.05.

As typical examples of preferred block copolymers there may be mentioned block copolymers having the aromatic polyether structure described in Japanese Unexamined Patent Publication No. 2005-126684 and Japanese Unexamined Patent Publication No. 2005-139432, comprising a block with acidic groups and a block with essentially no ion-exchange groups. The block copolymers comprising a polyarylene block with acidic groups, described in International Patent Publication No. WO2006/095919 already disclosed by the present applicant, can form hydrocarbon-based polymer electrolyte membranes with high levels of both ionic conductive and water resistance, and therefore solid polymer fuel cells with more excellent electric power generation properties can be provided by a synergistic effect with the catalyst layer.

Examples of suitable block copolymers for the hydrocarbon-based polymer electrolyte include the block copolymers represented by chemical formulas (1a), (1b) and (1c) below. In chemical formulas (1a), (1b) and (1c), n and m represent the numbers of each repeating unit, and the label "block" represents a block copolymer having blocks composed of the repeating units.

[Chemical Formula 1]

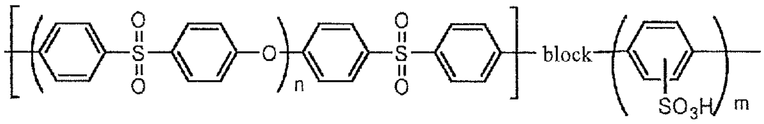
(1a)

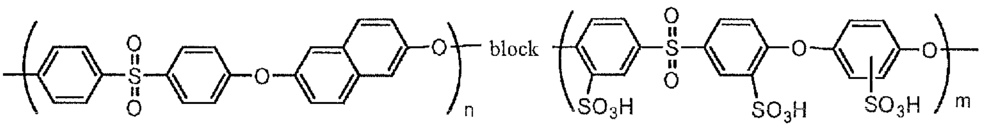
(1b)

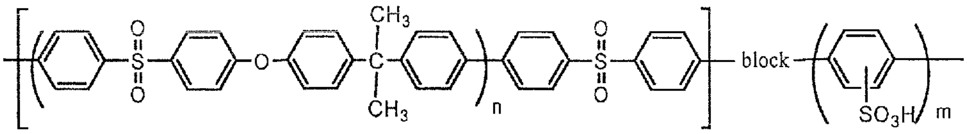
(1c)

The optimal range for the molecular weight of the hydrocarbon-based polymer electrolyte may be appropriately determined according to the structure, but the number-average molecular weight (Mn) based on polystyrene is preferably 1000-1,000,000, more preferably 5000-500,000 and even more preferably 10,000-300,000, according to GPC (gel permeation chromatography).

The hydrocarbon-based polymer electrolyte membrane 1 may contain other components in addition to the hydrocarbon-based polymer electrolytes mentioned as examples above, depending on the desired properties and in ranges that do not significantly reduce the proton conductivity. As such other components there may be mentioned additives such as plasticizers, stabilizers, release agents and humectants that are ordinarily used in polymers. Preferably used among these are stabilizers, in order to increase the chemical stability including oxidation resistance and radical resistance.

The hydrocarbon-based polymer electrolyte membrane 1 most preferably includes a stabilizer for radical resistance. During operation of the solid polymer fuel cell, the peroxides produced in the catalyst layer are converted to radical species while diffusing in the polymer electrolyte membrane adjacent to the catalyst layer, and this causes deterioration of the hydrocarbon-based polymer electrolytes composing the polymer electrolyte membrane. If the hydrocarbon-based polymer electrolyte membrane 1 contains a stabilizer which minimizes such deterioration, it is possible to avoid such inconvenience. Preferred stabilizers are antioxidants such as hindered phenols and hindered amines, as well as aromatic phosphonic acids represented by the following general formula (3), that have been already discovered and disclosed in Japanese Unexamined Patent Publication No. 2003-282096 by the present applicant.

These aromatic phosphonic acids include aromatic phosphonic acids represented by the following general formula (3).

[Chemical Formula 2]

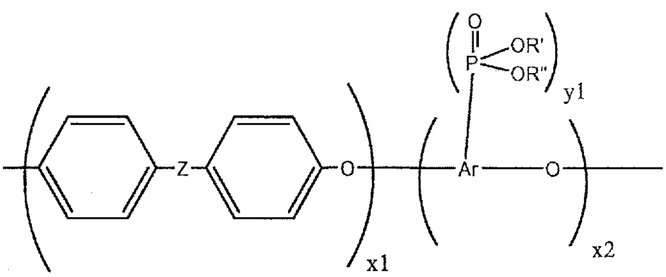
(3)

In general formula (3), Z represents $-SO_2-$ or -CO-, and x1 and x2 represent the respective weight ratios of each structural unit (repeating unit) which are in the range of 0.01-0.99. Ar represents a C4-18 divalent aromatic group optionally containing a hetero element, and Ar is optionally substituted. The symbol y1 represents the average number of P(O)(OR')(OR") substituents per repeating unit of the polymer portion containing Ar, and y1 is preferably a positive integer of no greater than 8. R' and R" each independently represent hydrogen or an alkyl group.

The form of copolymerization of the repeating unit in the aforementioned aromatic phosphonic acids is not particularly restricted and may be random copolymerization, alternating copolymerization or block copolymerization, but alternating copolymerization or random copolymerization is the preferred copolymerization form for easier production. The P(O)(OR')(OR") groups are also preferably phosphonic acid groups (where both R' and R" are hydrogen). The proportion of x1 and x2 in the polymer electrolyte membrane 12 is within the range specified above, but x1 is preferably 0.60-0.90 and more preferably 0.70-0.90.

The aromatic phosphonic acids mentioned above contain two repeating units as essential components, as represented in general formula (3) above, but they may also contain other repeating units. For example, they may contain small amounts of a repeating unit represented by the following general formula (4).

[Chemical Formula 3]

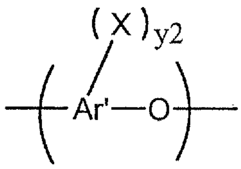

(4)

In general formula (4), X represents a halogen atom, and Ar' represents a C4-18 divalent aromatic group optional containing a hetero element. The symbol y2 represents the average number of X substituents per repeating unit of the polymer portion containing Ar', and y2 is a positive integer of no greater than 8.

Any of various known methods may be used to obtain a hydrocarbon-based polymer electrolyte membrane from a hydrocarbon-based polymer electrolyte such as mentioned above, but solution casting is preferred because it allows a membrane with the desired thickness to be obtained by a simple procedure. Solution casting is a method in which a polymer electrolyte solution obtained by dissolving the hydrocarbon-based polymer electrolyte in an organic solvent is coated onto a support base such as a glass panel and the organic solvent is removed to form a film. The organic solvent is selected in consideration of its solubility for the hydrocarbon-based polymer electrolyte used, but for an aromatic-based polymer electrolyte as a preferred hydrocarbon-based polymer electrolyte, there are preferred N,N-dimethylacetamide ("DMAc"), N,N-dimethylformamide ("DMF"), dimethyl sulfoxide ("DMSO") and N-methyl-2-pyrrolidone ("NMP"), as well as mixtures of the foregoing. When the hydrocarbon-based polymer electrolyte membrane contains additives such as the aforementioned stabilizers, they may be dissolved together with the hydrocarbon-based polymer electrolyte in the polymer electrolyte solution used for solution casting.

In order to increase the mechanical strength of the hydrocarbon-based polymer electrolyte membrane 1, the polymer electrolyte and support may be composited to form a composite membrane. The support may be a base material with a fibril form or porous membrane form.

The cathode catalyst layer 2 and anode catalyst layer 3, i.e. the catalyst layers, comprise a catalyst substance and a polymer electrolyte.

The catalyst substance used may be one that has been used for solid polymer fuel cells in the prior art, and for example, there may be used platinum, platinum-containing alloys such as platinum-ruthenium alloy, or combinations of these. In order to facilitate electron transport with the catalyst layer, it is preferred to use as the support a conducting material which supports the catalyst substance on the surface. As conducting materials there may be used conductive carbon materials such as carbon black or carbon nanotubes, and ceramic materials such as titanium oxide.

The polymer electrolyte in the catalyst layer has a function of mediating exchange of ions between the catalyst substance and the hydrocarbon-based polymer electrolyte membrane 1, and therefore one with ionic conductivity is used. The polymer electrolyte also has a function as a binder to bind the catalyst substance in the catalyst layer.

As polymer electrolytes to be added in the catalyst layer for this embodiment, there may be used hydrocarbon-based polymer electrolytes and fluorine-based polymer electrolytes, and as examples there may be mentioned Nafion$^R$ by DuPont Corp., aliphatic polymer electrolytes and aromatic polymer electrolytes. Hydrocarbon-based polymer electrolytes are preferred from the viewpoint of obtaining a satisfactory bonding property between the hydrocarbon-based polymer electrolyte membrane 1 and the cathode catalyst layer 2 and anode catalyst layer 3.

As hydrocarbon-based polymer electrolytes for the catalyst layer there may be mentioned hydrocarbon-based polymer electrolytes to be used in the hydrocarbon-based polymer electrolyte membrane 1 mentioned above. Catalyst layers with even higher water retention have been obtained in the prior art by adding hydrocarbon-based polymer electrolytes instead of the fluorine-based polymer electrolytes commonly used in catalyst layers. Thus, the amount of product water discharged together with the oxidant gas or fuel gas can be minimized, thus allowing the hydrocarbon-based polymer electrolyte membrane to be further humidified.

The amount of polymer electrolyte in the catalyst layer is selected within a range that allows the ion exchange to occur, but the proportion of the polymer electrolyte weight with respect to the weight of the support supporting the catalyst substance is preferably in the range of 0.05-1.0, more preferably in the range of 0.07-0.9 and even more preferably in the range of 0.1-0.7.

The cathode side gas diffusion layer 4 and anode side gas diffusion layer 5, i.e. the gas diffusion layers, are not particularly restricted so long as they are conductive porous materials, and examples include carbon paper or carbon cloth, porous metal materials, porous ceramic materials and the like. The gas diffusion layer surface may also be treated with a water-repellent agent such as polytetrafluoroethylene (PTFE).

The cathode side gasket 6 and anode side gasket 7, i.e. the gaskets, are not particularly restricted so long as they are sealants that prevent leakage of the hydrogen gas used in the anode side or the air or oxygen gas used in the cathode side out of the MEGGA, and examples include gaskets made by extrusion molding, injection molding or punch molding of silicone rubber, polypropylene resin or fluorine-based resins (such as polytetrafluoroethylene resin). A gasket having the desired dimensions and thickness can be easily fabricated by such molding methods. Ordinary commercially available O-rings may also be used.

The cathode side separator 8 and anode side separator 9 are formed of electrically conductive materials. As examples of such materials there may be mentioned carbon, resin mold carbon, titanium, stainless steel and the like.

Fig. 2 is a schematic cross-sectional view of a laminated body used to produce the membrane-electrode-gas diffusion layer-gasket assembly shown in Fig. 1. The laminated body 31 comprises a membrane-electrode-gas diffusion layer assembly 22 obtained by laminating the cathode side gas diffusion layer 4, cathode catalyst layer 2, hydrocarbon-based polymer electrolyte membrane 1, anode catalyst layer 3 and anode side gas diffusion layer 5 in that order, a cathode side gasket 6 on the edges 4a of the cathode side gas diffusion layer 4 and on the edges 2a of the cathode catalyst layer 2, and an anode side gasket 7 on the edges of the anode catalyst layer 3 and anode side gas diffusion layer 5.

The hydrocarbon-based polymer electrolyte membrane 1 used may be one produced by a common method. As mentioned above, the hydrocarbon-based polymer electrolyte and the other optional components are dissolved in a solvent and a known solution casting method is used to obtain a hydrocarbon-based polymer electrolyte membrane 1 having the prescribed thickness. The thickness of the hydrocarbon-based polymer electrolyte membrane 1 in the laminated body 31 is preferably 5-100 μm and more preferably 10-30 μm.

The cathode catalyst layer 2 may be formed on one main side of the hydrocarbon-based polymer electrolyte membrane 1, and the anode catalyst layer 3 may be formed on the other main side.

The cathode catalyst layer 2 and anode catalyst layer 3 comprise a catalyst substance and a polymer electrolyte. The catalyst layer may be formed by coating the hydrocarbon-based polymer electrolyte membrane 1 with a catalyst ink containing the catalyst substance, polymer electrolyte and solvent and drying it to remove the solvent. According to a different embodiment, the catalyst layer may be formed on the hydrocarbon-based polymer electrolyte membrane by a method in which the catalyst ink is used to produce a catalyst layer/support base laminated body on a suitable support base, the laminated body is thermocompression bonded to the hydrocarbon-based polymer electrolyte membrane 1, and then the support base is released.

The means for forming the catalyst layer described above as an example is preferred because a method of directly coating the catalyst ink onto the hydrocarbon-based polymer electrolyte membrane will allow strong adhesion to be exhibited between the obtained catalyst layer and the hydrocarbon-based polymer electrolyte membrane.

The catalyst ink will now be explained. As mentioned above, the catalyst ink contains a catalyst substance, polymer electrolyte and solvent as essential components, and if spraying is used as a preferred coating method, the solvent in the catalyst ink may be selected in a range that does not significantly impair the coated polymer electrolyte membrane. From this standpoint, the solvent is preferably a solvent selected from among water and hydrophilic organic solvents. Such solvents generally have low solubility for polymer electrolytes that are applied in catalyst inks, and therefore it is preferred to use a polymer electrolyte emulsion in which all or a portion of the hydrocarbon-based polymer electrolyte is dispersed in the solvent.

A suitable method for producing such catalyst ink will now be explained. First, a polymer electrolyte emulsion is prepared. The polymer electrolyte emulsion is preferably produced by, for example, a method comprising a preparation step in which a polymer electrolyte solution comprising the hydrocarbon-based polymer electrolyte dissolved in an organic solvent is prepared, and a formulation step in which the polymer electrolyte solution is added dropwise into a solvent selected from among water and hydrophilic solvents to prepare a dispersion solution comprising the polymer electrolyte particle dispersed in the solvent. The dispersion solution obtained in this manner may be used directly as the polymer electrolyte emulsion, or the organic solvent used in the polymer electrolyte solution may be removed if necessary to obtain the polymer electrolyte emulsion. An acid or alkali may also be added from the viewpoint of improving the dispersion stability of the polymer electrolyte emulsion. In addition, the organic solvent used in the polymer electrolyte solution in the preparation step is preferably an organic solvent that can moderately dissolve the hydrocarbon-based polymer electrolyte, and specifically it is preferably any of the organic solvents mentioned for the polymer electrolyte solution in

solution casting. As hydrocarbon-based polymer electrolytes for the polymer electrolyte emulsion there are preferred those with ion-exchange capacities of about 0.5-3.0 meq/g. The hydrocarbon-based polymer electrolyte may also be a crosslinked polymer electrolyte with partial crosslinking. When such a crosslinked polymer electrolyte is used, the polymer electrolyte emulsion may be produced by replacing the polymer electrolyte solution in the preparation step with a gel particle dispersion of the crosslinked polymer electrolyte dispersed as gel particles in an organic solvent. A hydrophilic solvent used as the dispersing medium for the polymer electrolyte emulsion is preferably a lower alcohol, and water or a mixture of water and an alcohol is particularly preferred as the dispersing medium. The concentration of the hydrocarbon-based polymer electrolyte in the polymer electrolyte emulsion is preferably 0.1-10 wt%.

The catalyst substance is added to the polymer electrolyte emulsion obtained in this manner to obtain a catalyst ink. The catalyst ink is of course prepared so as to avoid any notable reduction in dispersion stability of the polymer electrolyte particles in the polymer electrolyte emulsion, but also in such a manner to facilitate uniform mixing of the catalyst substance. The mixing method used to accomplish uniform mixing may employ an ultrasonic dispersion device, homogenizer, ball mill, planetary ball mill, sand mill or the like.

The catalyst ink may also contain, in addition to the catalyst substance and polymer electrolyte, also a water-repellent agent such as polytetrafluoroethylene (PTFE) or a humectant, to control the water-repellency or water retention of the catalyst layer. As other optional additives there may be included a pore-forming material such as calcium carbonate to increase the gas diffusion property of the catalyst layer, or a stabilizer such as a metal oxide to increase the durability of the obtained MEA.

The method for directly coating the catalyst ink onto the hydrocarbon-based polymer electrolyte membrane 1 may be a known coating method employing a die coater, screen printing, spraying or an ink-jet. Spraying is preferred among these methods. "Spraying" means spraying a fluid material by the jet force of a compressed gas to produce a fine particulate form of the material which adheres onto a board or the like. Specifically, the method described in Japanese Unexamined Patent Publication No. 2004-89976 may be suitably used.

In the laminated body 31, the thickness A1 of the cathode catalyst layer 2 and the thickness A2 of the anode catalyst layer 3 are preferably 0.5-30 μm and more preferably 1-20 μm. The thicknesses A1 and A2 of the catalyst layer are preferably within this range from the viewpoint of reaction efficiency for the electrochemical reaction in the catalyst layer, as well as from the viewpoint of practicality in forming the catalyst layer with the catalyst ink. The thickness of the catalyst layer can be controlled by varying the basis weight of the catalyst layer.

The cathode side gas diffusion layer 4 is laminated on the main side of the cathode catalyst layer 2 opposite the side of the contact surface with the hydrocarbon-based polymer electrolyte membrane 1, while the anode side gas diffusion layer 5 is laminated on the main side of the anode catalyst layer 3 opposite the side of the contact surface with the hydrocarbon-based polymer electrolyte membrane 1.

In the laminated body 31, the thickness B1 of the cathode side gas diffusion layer 4 and the thickness B2 of the anode side gas diffusion layer 5 are preferably 60-400 μm and more preferably 100-350 μm. The thicknesses B1 and B2 are preferably within this range in order to maintain a sufficient diffusion length to allow efficient supply of the reactive gas (fuel gas or oxidant gas) into the gas diffusion layer. The thickness of the gas diffusion layer can be adjusted by appropriate selection of a commercial product.

In the cathode sealing step of the method for producing a membrane-electrode-gas diffusion layer-gasket assembly according to this embodiment, the cathode side gasket 6 is formed covering at least part of the edges 2a, 4a of the cathode catalyst layer 2 and cathode side gas diffusion layer 4. In the anode sealing step, the anode side gasket 7 is formed covering at least part of the edges 3a, 5a of the anode catalyst layer 3 and anode side gas diffusion layer 5. A laminated body 31 can be obtained in this manner.

In the laminated body 31, the thickness C1 of the cathode side gasket 6 and the thickness C2 of the anode side gasket 7 are preferably 50-350 μm and more preferably 80-300 μm. C1 and C2 are preferably within this range to allow suitable thicknesses to be maintained for the gas diffusion layer and catalyst layer explained above, and also because the solid polymer fuel cell obtained using the MEGGA will be on a relatively small scale, thus allowing smaller sizes to be achieved for solid polymer fuel cell stacks obtained by combining multiple solid polymer fuel cells. According to this embodiment, the thicknesses C1 and C2 become the lengths (thicknesses) of the gaskets 6, 7 running along the direction of lamination of the laminated body 31.

For this embodiment, the value of (A1+B1)/C1 (hereinafter referred to simply as "X"), where A1 is the thickness of the cathode catalyst layer 2 of the laminated body 31, B1 is the thickness of the cathode side gas diffusion layer 4 and C1 is the thickness of the cathode side gasket 6, is at least 1.2, by which it will be possible to obtain a solid polymer fuel cell with sufficiently excellent electric power generation properties and a MEGGA that can be used to form such a solid polymer fuel cell. An X value of 1.2 or greater and preferably 1.3 or greater will allow a solid polymer fuel cell to be obtained that exhibits a higher level of both electric power generation properties and durability.

The X value is preferably 1.2-2.5, more preferably 1.2-2.3 and even more preferably 1.2-2.0. The value of X is preferably no greater than 2.5 so that the pressure applied in the direction of lamination of the cathode catalyst layer and cathode side gas diffusion layer will be in a practical range for production of a MEGGA satisfying formula (1), thus

facilitating production of the MEGGA.

Also for this embodiment, the value of (A2+B2)/C2 (hereinafter referred to simply as "Y"), where A2 is the thickness of the anode catalyst layer 3 of the laminated body 31, B2 is the thickness of the anode side gas diffusion layer 5 and C2 is the thickness of the anode side gasket 7, is at least 1.2, by which it will be possible to obtain a solid polymer fuel cell with sufficiently excellent electric power generation properties and a MEGGA that can be used to form such a solid polymer fuel cell. A Y value of 1.2 or greater and preferably 1.3 or greater will allow a solid polymer fuel cell to be obtained that exhibits a higher level of both electric power generation properties and durability.

The Y value is preferably 1.2-2.5, more preferably 1.2-2.3 and even more preferably 1.2-2.0. The value of Y is preferably no greater than 2.5 so that the pressure applied in the direction of lamination of the anode catalyst layer and anode side gas diffusion layer will be in a practical range for production of a MEGGA satisfying formula (2), thus facilitating production of the MEGGA.

The total value of X and Y is preferably 2.4-5.0, more preferably 2.4-4.6 and even more preferably 2.4-4.0.

More preferably, the values of X and Y are preferably 1.2 or greater. This will allow a MEGGA to be obtained that can realize a solid polymer fuel cell with even more excellent electric power generation properties.

The method for producing a membrane-electrode-gas diffusion layer-gasket assembly according to this embodiment preferably includes a cathode side gasket-bonding step in which the laminated body 31 is pressed at 1.0-3.0 MPa in the direction of lamination for contact bonding of the cathode side gasket 6 with the hydrocarbon-based polymer electrolyte membrane 1. The cathode side gasket-bonding step can be carried out during the cathode sealing step or after the cathode sealing step. In the cathode side gasket-bonding step, the cathode side gasket 6 that has been formed on the edges 4a, 2a of the cathode side gas diffusion layer 4 and cathode catalyst layer 2 in the cathode sealing step is adhesion bonded to the hydrocarbon-based polymer electrolyte membrane 1.

The method for producing a membrane-electrode-gas diffusion layer-gasket assembly according to this embodiment preferably also includes an anode side gasket-bonding step in which the laminated body 31 is pressed at 1.0-3.0 MPa in the direction of lamination for contact bonding of the anode side gasket 7 with the hydrocarbon-based polymer electrolyte membrane 1. The anode side gasket-bonding step can be carried out during the anode sealing step or after the anode sealing step. In the anode side gasket-bonding step, the anode side gasket 7 that has been formed on the edges 5a, 3a of the anode side gas diffusion layer 5 and anode catalyst layer 3 in the anode sealing step is adhesion bonded to the hydrocarbon-based polymer electrolyte membrane 1.

Carrying out the steps described above produces a membrane-electrode-gas diffusion layer-gasket assembly 30 (Fig. 1). Pressing of the laminated body 31 may be accomplished, for example, by providing appropriate pressure plates sandwiching the laminated body 31 and performing pressure bonding (contact bonding), or by sandwiching the laminated body 31 with a pair of separators as well.

The cathode sealing step and anode sealing step were carried out simultaneously in this embodiment, but they may be carried out separately instead. However, the cathode sealing step and anode sealing step are preferably carried out simultaneously from the viewpoint of facilitating production of the membrane-electrode-gas diffusion layer-gasket assembly and solid polymer fuel cell.

(Modified example of first embodiment)

Fig. 3 is a schematic cross-sectional view of a laminated body used as a modified example of the first embodiment. The cathode side gasket 61 and anode side gasket 71 are cylindrical, and may be ordinary O-rings. Instead of ordinary O-rings, there may be used gaskets comprising foam sponge layers on rubber sheets such as disclosed in Japanese Unexamined Patent Publication HEI No. 7-312223, or gaskets formed into lip shapes with convex cross-sections, such as disclosed in Japanese Unexamined Patent Publication No. 2001-155745.

In the cathode sealing step of the method for producing a membrane-electrode-gas diffusion layer-gasket assembly according to this modified example, the cathode side gasket 61 is formed on the edges 2a, 4a of the cathode catalyst layer 2 and cathode side gas diffusion layer 4.

In the anode sealing step of the method for producing a membrane-electrode-gas diffusion layer-gasket assembly according to this modified example, the anode side gasket 71 is formed on the edges 3a, 5a of the anode catalyst layer 3 and anode side gas diffusion layer 5.

The thicknesses C1 and C2 of the cathode side gasket 61 and anode side gasket 71 in the laminated body 32 are the maximum thicknesses of each gasket in the direction of lamination of the laminated body 32, from the plane containing the bonding surface between the hydrocarbon-based polymer electrolyte membrane 1 and the cathode catalyst layer 2 and anode catalyst layer 3.

The laminated body 32 of this modified example may be used to produce a membrane-electrode-gas diffusion layer-gasket assembly in the same manner as the embodiment described above.

(Second embodiment)

Fig. 4 is a schematic cross-sectional view of a solid polymer fuel cell comprising a membrane-electrode-gas diffusion layer-gasket assembly according to a second embodiment of the invention. As shown in Fig. 4, the membrane-electrode assembly 15 comprises a cathode catalyst layer 2 on one main side of the hydrocarbon-based polymer electrolyte membrane 1, and an anode catalyst layer 3 on the other main side of the hydrocarbon-based polymer electrolyte membrane 1. That is, the cathode catalyst layer 2 and anode catalyst layer 3 are laminated sandwiching the hydrocarbon-based polymer electrolyte membrane 1 to construct the membrane-electrode assembly 15.

In the membrane-electrode assembly 15, a cathode side gas diffusion layer 4 is formed in contact with the main side of the cathode catalyst layer 2 opposite the contact surface side of the hydrocarbon-based polymer electrolyte membrane 1, and an anode side gas diffusion layer 5 is formed in contact with the main side of the anode catalyst layer 3 opposite the contact surface side of the hydrocarbon-based polymer electrolyte membrane 1. As a result, the membrane-electrode-gas diffusion layer assembly 25 has a construction comprising the membrane-electrode assembly 15 and a pair of gas diffusion layers sandwiching the membrane-electrode assembly 15.

The cathode side gas diffusion layer 4 and anode side gas diffusion layer 5 composing the membrane-electrode-gas diffusion layer assembly 25 differ from the membrane-electrode-gas diffusion layer assembly 20 of Fig. 1 in that the areas of the cross-sections orthogonal to the direction of lamination of the membrane-electrode-gas diffusion layer assembly 25 are smaller than the cathode catalyst layer 2 and anode catalyst layer 3, respectively. On the membrane-electrode-gas diffusion layer assembly 25 there are formed a cathode side gasket 16 covering the edges 2a of the cathode catalyst layer 2 and the edges 4a of the cathode side gas diffusion layer 4, and an anode side gasket 17 covering the edges 3a of the anode catalyst layer 3 and the edges of the anode side gas diffusion layer 5. A membrane-electrode-gas diffusion layer-gasket assembly 35 is thus constructed.

A solid polymer fuel cell 42 is also constructed by providing a pair of separators 8, 9 sandwiching the membrane-electrode-gas diffusion layer-gasket assembly 35. That is, the solid polymer fuel cell 42 comprises a cathode side separator 8 in contact with the main side of the cathode side gas diffusion layer 4, and an anode side separator 9 in contact with the main side of the anode side gas diffusion layer 5.

Because the areas of the cross-sections of the cathode side gas diffusion layer 4 and anode side gas diffusion layer 5 orthogonal to the direction of lamination of the membrane-electrode-gas diffusion layer assembly 25 are smaller than those of the cathode catalyst layer 2 and anode catalyst layer 3, respectively, the cathode side gasket 16 and anode side gasket 17 contact with part of the main side of the cathode catalyst layer 2 and part of the main side of the anode catalyst layer 3, respectively. Consequently, part of the cathode side gasket 16 becomes sandwiched between the cathode catalyst layer 2 and cathode side separator 8. Likewise, part of the anode side gasket 17 becomes sandwiched between the anode catalyst layer 3 and anode side separator 9.

The hydrocarbon-based polymer electrolyte membrane 1, catalyst layers 2, 3, gas diffusion layers 4, 5 and gaskets 16, 17 used for the membrane-electrode-gas diffusion layer-gasket assembly 35 may be the same as for the membrane-electrode-gas diffusion layer-gasket assembly 30 of the first embodiment. The gaskets 16, 17 differ in shape from the gaskets 6, 7 of the first embodiment, but the materials and molding method may be the same as for the gaskets 6, 7.

Fig. 5 is a schematic cross-sectional view of a laminated body used to produce the membrane-electrode-gas diffusion layer-gasket assembly shown in Fig. 4. The laminated body 33 comprises a membrane-electrode-gas diffusion layer assembly 27 obtained by laminating the cathode side gas diffusion layer 4, cathode catalyst layer 2, hydrocarbon-based polymer electrolyte membrane 1, anode catalyst layer 3 and anode side gas diffusion layer 5 in that order, a cathode side gasket 16 on the edges 4a of the cathode side gas diffusion layer 4 and on the edges 2a of the cathode catalyst layer 2, and an anode side gasket 17 on the edges 3a of the anode catalyst layer 3 and on the edges 5a of the anode side gas diffusion layer 5.

The cathode side gasket 16 contacts part of the main side of the cathode catalyst layer 2 while the anode side gasket 17 contacts part of the main side of the anode catalyst layer 3. The laminated body 33 can be formed in the same manner as the laminated body 31 shown in Fig. 2.

That is, in the cathode sealing step, a cathode side gasket 6 is formed covering the edges 2a, 4a of the cathode catalyst layer 2 and cathode side gas diffusion layer 4 and part of the main side of the cathode catalyst layer 2. In the anode sealing step, an anode side gasket 7 is formed covering at least parts of the edges 3a, 5a of the anode catalyst layer 3 and anode side gas diffusion layer 5 and part of the main side of the anode catalyst layer 3. A laminated body 27 can be obtained in this manner.

The thickness C1 of the cathode side gasket 16 is the maximum thickness along the direction of lamination of the membrane-electrode-gas diffusion layer-gasket assembly, and the thickness C2 of the anode side gasket 17 is the maximum thickness along the direction of lamination. Using these thicknesses C1 and C2, it is possible to calculate the value for "X", i.e. A1+B1)/C1 and the value for "Y", i.e. (A2+B2)/C2, as explained above. If the values of X or Y are 1.2 or greater, it will be possible to obtain a solid polymer fuel cell with sufficiently excellent electric power generation

properties, and a MEGGA that can be used to form such a solid polymer fuel cell. The preferred ranges for X and Y are the same as for the first embodiment.

The method for producing the membrane-electrode-gas diffusion layer-gasket assembly 35 preferably includes a cathode side gasket-bonding step in which the laminated body 33 is pressed at 1.0-3.0 MPa in the direction of lamination for contact bonding of the cathode side gasket 16 with the hydrocarbon-based polymer electrolyte membrane 1.

The method for producing a membrane-electrode-gas diffusion layer-gasket assembly according to this embodiment preferably also includes an anode side gasket-bonding step in which the laminated body 33 is pressed at 1.0-3.0 MPa in the direction of lamination for contact bonding of the anode side gasket 17 with the hydrocarbon-based polymer electrolyte membrane 1.

Carrying out the steps described above produces a membrane-electrode-gas diffusion layer-gasket assembly 35 (Fig. 4). Pressing of the laminated body 33 may be accomplished, for example, by providing appropriate pressure plates sandwiching the laminated body 33 and performing pressure bonding (contact bonding), or by sandwiching the laminated body 33 with a pair of separators as well.

(Third embodiment)

Fig. 6 is a structural schematic view of a solid polymer fuel cell according to a third embodiment of the invention. As shown in Fig. 6, the solid polymer fuel cell 40 has the following construction.

The cathode catalyst layer 2 is laminated on one main side of the hydrocarbon-based polymer electrolyte membrane 1, and the anode catalyst layer 3 is laminated on the other main side. A cathode side gas diffusion layer 4 is laminated on the main side of the cathode catalyst layer 2 opposite the side of the contact surface with the hydrocarbon-based polymer electrolyte membrane 1. A cathode side gasket 6 is formed covering the edges of the cathode catalyst layer 2 and cathode side gas diffusion layer 4 within the regions of the cathode catalyst layer 2 and cathode side gas diffusion layer 4. An anode side gas diffusion layer 5 is laminated on the main side of the anode catalyst layer 3 opposite the side of the contact surface with the hydrocarbon-based polymer electrolyte membrane 1. An anode side gasket 7 is formed covering the edges of the anode catalyst layer 3 and anode side gas diffusion layer 5 within the regions of the anode catalyst layer 3 and anode side gas diffusion layer 5. A cathode side separator 8 is laminated on the main side of the cathode side gas diffusion layer 4 opposite the side of the contact surface with the cathode catalyst layer 2, so that the cathode side gasket 6 is sandwiched between the cathode side separator 8 and the hydrocarbon-based polymer electrolyte membrane 1. Also, an anode side separator 9 is laminated on the main side of the anode side gas diffusion layer 5 opposite the side of the contact surface with the anode catalyst layer 3, so that the anode side gasket 7 is sandwiched between the anode side separator 9 and the hydrocarbon-based polymer electrolyte membrane 1.

While not shown here, a groove is formed in the anode side separator 9, to serve as a fluid channel for supply of fuel gas such as hydrogen gas to the anode side gas diffusion layer 5 and anode catalyst layer 3. Also, while not shown here, a groove is formed in the cathode side separator 8 similar to the anode side separator 9, to serve as a fluid channel for supply of oxidant gas such as oxygen to the cathode side gas diffusion layer 4 and cathode catalyst layer 2. A manifold 14a for supply of oxidant gas (air or oxygen) is provided in the cathode side separator 8, while a manifold 14b for supply of fuel gas (hydrogen) is provided in the anode side separator 9.

The solid polymer fuel cell 40 can be fabricated by sandwiching a laminated body 31 comprising the cathode side gasket 6, cathode side gas diffusion layer 4, cathode catalyst layer 2, hydrocarbon-based polymer electrolyte membrane 1, anode catalyst layer 3, anode side gas diffusion layer 5 and anode side gasket 7 (Fig. 2), between the cathode side separator 8 and anode side separator 9 as shown in Fig. 6, and pressing to anchor the stack.

The embodiment described above is only a preferred embodiment of the invention, and the invention is in no way limited thereto.

## Examples

The present invention will now be explained in greater detail by examples and comparative examples, with the understanding that the invention is in no way limited only to the examples.

(Example 1)

<Synthesis of polymer electrolyte 1>

A polymer electrolyte 1 represented by formula (5) [wherein n and m represent the polymerization degree of each repeating unit] was obtained following the procedure described in Example 1 of International Patent Publication No. WO2006/095919. Specifically, first 2.10 parts by weight of polyethersulfone having terminal C1 groups (trade name: SUMIKA EXCEL PES5200P by Sumitomo Chemical Co., Ltd., number-average molecular weight: $5.2 \times 10^4$, weight-

average molecular weight: 8.8 × $10^4$), 5.70 parts by weight of sodium 2,5-dichlorobenzenesulfonate, 9.32 parts by weight of 2,2-bipyridyl, 142.23 parts by weight of dimethyl sulfoxide and 55.60 parts by weight of toluene were placed in a reactor and stirred under a nitrogen atmosphere, to obtain a mixed solution. Next, the reactor was reduced in pressure to around 10 kPa and the mixed solution in the reactor was raised to 60-70°C for 8 hours of reflux dewatering.

After dewatering, the toluene was distilled off from the mixed solution and the mixed solution was kept at 65°C while adding 15.407 parts by weight of bis(1,5-cyclooctadiene)nickel(0). After the addition, the mixed solution was stirred at 70°C for 5 hours to obtain a reaction mixture. The reaction mixture was cooled to room temperature, the reaction mixture was then added into a large amount of methanol to precipitate the polymer, and the polymer was filtered. The obtained polymer was rinsed with 6N hydrochloric acid and water, further rinsed with hot water at 90°C and filtered to obtain polymer electrolyte 1 represented by formula (5) below as a block copolymer. The weight-average molecular weight was 2.3 × $10^5$, the number-average molecular weight was 1.1 × $10^5$ and the ion-exchange capacity was 2.2 meq/g. The label "block" in formula (5) indicates a block copolymer having blocks composed of the structural unit in parentheses.

[Chemical Formula 4]

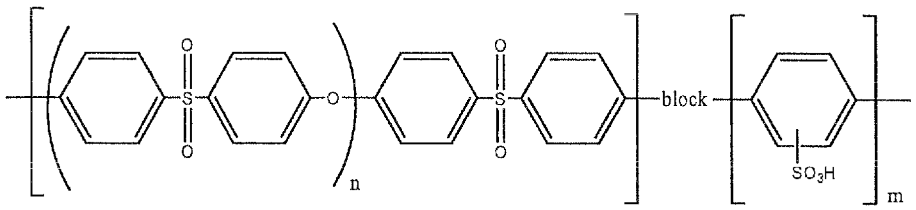

(5)

<Formulation of stabilizer polymer>

The random copolymer represented by general formula (6) below was formulated by using diphenylsulfone as the solvent, and reacting 4,4'-dihydroxydiphenylsulfone, 4,4'-dihydroxybiphenyl and 4,4'-dichlorodiphenylsulfone in a molar ratio of 4:6:10 in the presence of potassium carbonate. In general formula (6), "0.70" and "0.30" shown for each repeating unit represent the molar ratios of each repeating unit.

[Chemical Formula 5]

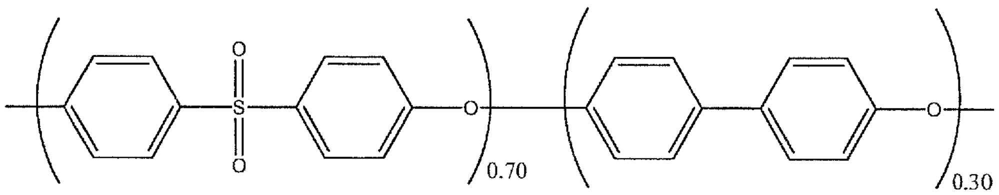

(6)

Next, following the method described in Japanese Unexamined Patent Publication No. 2003-282096, the random copolymer represented by general formula (6) was subjected to bromination and phosphonic acid esterification treatment, and then further hydrolyzed to obtain a stabilizer polymer having a structure with approximately 0.2 bromo groups and approximately 1.7 phosphonic acid groups for each unit comprising the oxybiphenylene structure in general formula (6).

<Formulation of hydrocarbon-based polymer electrolyte membrane>

A polymer electrolyte solution was formulated by dissolving a mixture of the polymer electrolyte 1 obtained as described above and an additive (stabilizer polymer) (polymer electrolyte 1:additive = 9:1 (weight ratio)) in dimethyl sulfoxide (DMSO) to a concentration of about 15 wt%. The polymer electrolyte solution was then dropped onto a glass plate. A wire coater was used to evenly spread the polymer electrolyte solution onto the glass plate. The clearance of

the wire coater was varied during this time to control the coating thickness. After coating the polymer electrolyte solution, it was dried at 80°C under ordinary pressure. The obtained membrane was immersed in 1 mol/L hydrochloric acid and then rinsed with ion-exchanged water, and further dried at ordinary temperature to obtain a hydrocarbon-based polymer electrolyte membrane with a thickness of 20 μm.

<Production of catalyst ink 1>

To 2.11 g of a commercially available 5 wt% Nafion$^R$ solution (product of Aldrich Co., trade name: Nafion perfluorinated ion-exchange resin, 5 wt% soln in lower aliphatic alcohols/$H_2O$ mix, solvent: water/lower alcohol mixture) there was added 0.50 g of platinum-supporting carbon with the platinum supported at 70.0 wt%, and then 21.83 g of ethanol and 3.23 g of water were added. The obtained mixture was subjected to ultrasonic treatment for 1 hour and then stirred for 6 hours with a stirrer to obtain catalyst ink 1.

<Fabrication of laminated body>

The catalyst ink 1 was coated by spraying onto a 5.2 cm square region at the center of one main side of the hydrocarbon-based polymer electrolyte membrane obtained as described above. Specifically, the distance from the catalyst ink 1 discharge hole to the hydrocarbon-based polymer electrolyte membrane was 6 cm, and the stage temperature was set to 75°C. After recoating the catalyst ink 1 under the same conditions, the hydrocarbon-based polymer electrolyte membrane recoated with the catalyst ink 1 was left to stand on the stage for 15 minutes and the solvent was removed to form an anode catalyst layer. The anode catalyst layer contained 0.16 mg/cm$^2$ platinum, as calculated from the catalyst ink 1 composition, the anode catalyst layer area and the weight of the coated catalyst ink 1. Next, the catalyst ink 1 was double-coated onto the main side of the hydrocarbon-based polymer electrolyte membrane opposite the main side on which the anode layer had been formed, in the same manner as for formation of the anode catalyst layer, and the solvent was removed to form a cathode catalyst layer containing 0.60 mg/cm$^2$ platinum.

The thicknesses of each catalyst layer formed on the main sides of the hydrocarbon-based polymer electrolyte membrane are measured after the prescribed amount of platinum has been situated in each catalyst layer on the hydrocarbon-based polymer electrolyte membrane, and after it has been allowed to stand for 24 hours under conditions with a temperature of 23.0°C and a relative humidity of 50.0% RH. A film thickness meter (trade name: Dial Gauge Application Meter 547-401, product of Mitsutoyo Corp.) was used to measure the thickness at one point of each of the four corners of each catalyst layer, and the average value was recorded as the thickness of each catalyst layer. As a result, the thickness (A2) of the anode catalyst layer was 3.3 μm and the thickness (A1) of the cathode catalyst layer was 7.3 μm.

A carbon cloth (trade name: ELAT/NC/V2.1-20 by E-TEK, thickness (B1): 250 μm) was situated as a cathode side gas diffusion layer on the main side of the previously formed cathode catalyst layer opposite the contact surface with the hydrocarbon-based polymer electrolyte membrane. A carbon cloth (trade name: ELAT/NC/V2.1-20 by E-TEK, thickness (B2): 250 μm) was also situated as an anode side gas diffusion layer on the main side of the previously formed anode catalyst layer opposite the contact surface with the hydrocarbon-based polymer electrolyte membrane. In addition, a cathode side gasket (trade name: SB501P by Kureha Corp., thickness (C1): 210 μm) was situated on the edges of the cathode catalyst layer and cathode side gas diffusion layer and an anode side gasket (trade name: SB501P by Kureha Corp., thickness (C2): 210 μm) was situated on the edges of the anode catalyst layer and anode side gas diffusion layer, to obtain a laminated body. The values for the laminated body were X = 1.23, Y = 1.21.

<Assembly of solid polymer fuel cell>

A commercially available JARI standard cell was used to produce a solid polymer fuel cell. Specifically, a pair of carbon separators with gas passageway grooves cut therein, a collector and an end plate were laminated in that order on the main side of each gas diffusion layer, so as to sandwich the obtained laminated body, and were clamped with a bolt to assemble a solid polymer fuel cell with an effective membrane area of 25 cm$^2$. The bolt clamping torque was 3.5N·m.

<Evaluation of solid polymer fuel cell>

The assembled solid polymer fuel cell was kept at 80°C while humidified hydrogen was fed from the manifold on the anode catalyst layer side toward the anode side gas diffusion layer and humidified air was fed from the manifold on the cathode catalyst layer side toward the cathode side gas diffusion layer. The back pressure at the gas outlet of the cell was adjusted to 0.1 MPaG The humidification of each source gas was carried out by passing the gas through a bubbler containing water. The water temperature of the hydrogen bubbler was 45°C, the water temperature of the air bubbler was 55°C, the hydrogen gas flow rate was 529 mL/min and the air gas flow rate was 1665 mL/min. An electric

power generation test was conducted under these conditions, and the value of the current density was measured when the voltage of the solid polymer fuel cell reached 0.4 V, giving a value of 1.81 A/cm$^2$ as shown in Table 1.

(Example 2)

<Synthesis of polymer electrolyte 2, production of emulsion>

(Synthesis of ion-exchange group (sulfonic acid group)-containing high molecular compound)

After placing 9.32 parts by weight of dipotassium 4,4'-difluorodiphenylsulfone-3,3'-disulfonate, 4.20 parts by weight of potassium 2,5-dihydroxybenzenesulfonate, 59.6 parts by weight of DMSO and 9.00 parts by weight of toluene under an argon atmosphere in a flask equipped with an azeotropic distillation apparatus, the mixture was stirred at room temperature while bubbling in argon gas for 1 hour. Next, 2.67 parts by weight of potassium carbonate was added to the mixture and stirring was continued while heating at 140°C for azeotropic dehydration. Heating was subsequently continued while distilling off the toluene, to obtain a DMSO solution containing a high molecular compound with sulfonic acid groups. The total heating time was 14 hours. The obtained solution was allowed to cool to room temperature. Next, 2.67 parts by weight of potassium carbonate was added to the mixture and stirring was continued while heating at 140°C for azeotropic dehydration. Heating was subsequently continued while distilling off the toluene, to obtain a DMSO solution containing a high molecular compound with sulfonic acid groups. The total heating time was 14 hours. The obtained solution was allowed to cool to room temperature.

(Synthesis of high molecular compound with essentially no ion-exchange groups)

After placing 8.32 parts by weight of 4,4'-difluorodiphenylsulfone, 5.36 parts by weight of 2,6-dihydroxynaphthalene, 30.2 parts by weight of DMSO, 30.2 parts by weight of NMP and 9.81 parts by weight of toluene under an argon atmosphere in a flask equipped with an azeotropic distillation apparatus, the mixture was stirred at room temperature while bubbling in argon gas for 1 hour. Next, 5.09 parts by weight of potassium carbonate was added to the mixture and heated stirring was continued at 140°C for azeotropic dehydration. Heating was subsequently continued while distilling off the toluene. The total heating time was 5 hours. The obtained solution was allowed to cool to room temperature to obtain a NMP/DMSO mixed solution containing a high molecular compound with essentially no ion-exchange groups.

(Synthesis of block copolymer)

The NMP/DMSO containing the high molecular compound with essentially no ion-exchange groups obtained as described above was stirred while adding the total amount of the DMSO solution containing the high molecular compound with sulfonic acid groups, 80.4 parts by weight of NMP and 45.3 parts by weight of DMSO, and the mixture was heated at 150°C for 40 hours for block copolymerization reaction. The reaction mixture was dropped into a large amount of 2N hydrochloric acid and the produced precipitate was left immersed for 1 hour. The precipitate was then filtered out and re-immersed in 2N hydrochloric acid for 1 hour. The precipitate was filtered and rinsed with water, and then immersed in a large amount of hot water at 95°C for 1 hour. The precipitate was filtered and dried by heating at 80°C for 12 hours to obtain polymer electrolyte 2 as a block copolymer represented by general formula (7) below [wherein k and 1 represent the polymerization degrees of each repeating unit, and the label "block" represents a block copolymer having blocks composed of the structural unit in parentheses]. The ion-exchange capacity was 1.7 meq/g and the weight-average molecular weight was 250,000.

[Chemical Formula 6]

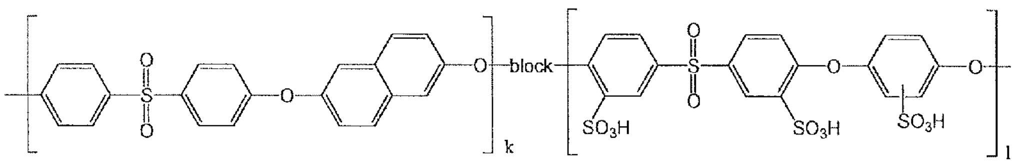

(7)

(Formulation of polymer electrolyte emulsion)

Polymer electrolyte 2 obtained above was dissolved in 1-methyl-2-pyrrolidone to a concentration of 1.0 wt% to prepare a 100 g of a polymer electrolyte solution. The 100 g of polymer electrolyte solution was added dropwise into 900 g of distilled water using a buret at a dropping rate of 3-5 g/min to dilute the polymer electrolyte solution. The dispersing medium of the diluted polymer electrolyte solution was exchanged with running water for 72 hours using a dialysis membrane dialyzing cellulose tube (trade name: UC36-32-100 by Sanko Junyaku Co., Ltd., molecular cutoff: 14,000). The dispersing medium-exchanged polymer electrolyte solution was concentrated to 2.2 wt% using an evaporator to obtain a polymer electrolyte emulsion containing the polymer electrolyte 2.

<Production of catalyst ink 2>

Catalyst ink 2 was produced in the same manner as catalyst ink 1, except that 3.35 g of a polymer electrolyte emulsion produced from the polymer electrolyte 2 was used instead of the 2.11 g of the 5 wt% Nafion$^{R}$ solution.

<Synthesis of polymer electrolyte 3, production of polymer electrolyte emulsion>

In a 200 mL flask equipped with a Dean-Stark tube there were added 4.00 g (16.06 mmol) of sodium 2,5-dichlorobenzenesulfonate, 7.24 g (46.38 mmol) of 2,2'-bipyridyl, 1.51 g of polyethersulfone having chloro groups on both ends, represented by formula (8) below (trade name: "SUMIKA EXCEL PES 5200P", product of Sumitomo Chemical Co., Ltd.), 533 mg (1.61 mmol) of 1-(4-bromobenzyloxy)-2,5-dichlorobenzene, 100 mL of dimethyl sulfoxide and 35 mL of toluene, and the mixture was subjected to azeotropic dehydration under reduced pressure at 100°C for 9 hours under an argon atmosphere, after which the toluene was distilled off out of the system and the mixture was allowed to cool to 70°C. Next, 11.60 g (42.16 mmol) of bis(1,5-cyclooctadiene)nickel (0) was added at once at 70°C. The temperature rose to 85°C immediately after addition of the bis(1,5-cyclooctadiene)nickel(0), and the mixture was stirred at that bath temperature. The polymerization solution gelled at about 5 minutes after addition of the bis(1,5-cyclooctadiene)nickel (0), and stirring was continued for 30 minutes. The obtained gel-like polymerization solution was poured into methanol, and then methanol rinsing/filtration of the aromatic polymer was repeated 3 times, rinsing with 6 mol/L aqueous hydrochloric acid/filtration was repeated 3 times, and rinsing/filtration was repeated with deionized water until the filtrate became neutral, after it was dried at 80°C to obtain 3.86 g of polymer electrolyte 3.

Next, 1.40 g of the polymer electrolyte 3 was weighed out and pulverized for 5 minutes with a sample mill and then mixed with 149 g of deionized water, and a step of pulverizing for 20 minutes using a homogenizer (trade name: Ultrasonic Homogenizer US-150T by Nissei Corp.) was repeated 3 times until the precipitate was no longer visible, to obtain a 0.9 wt% polymer electrolyte emulsion (polymer electrolyte emulsion of polymer electrolyte 3).

[Chemical Formula 7]

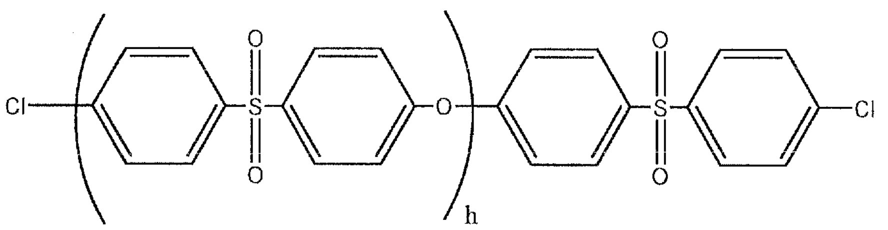

(8)

<Production of catalyst ink 3>

Catalyst ink 3 was produced in the same manner as catalyst ink 1, except that 2.67 g of a polymer electrolyte emulsion produced from polymer electrolyte 3 was used instead of the 2.11 g of the 5 wt% Nafion$^{R}$ solution.

<Fabrication of laminated body, and assembly and evaluation of solid polymer fuel cell>

A laminated body was fabricated in the same manner as Example 1, except that catalyst ink 2 was used instead of catalyst ink 1 that was used to fabricate the anode catalyst layer in Example 1, and catalyst ink 3 was used instead of catalyst ink 1 that was used to fabricate the cathode catalyst layer. The thickness (A2) of the anode catalyst layer

was 8.5 μm, the thickness (A1) of the cathode catalyst layer was 11.3 μm, and the X and Y values of the laminated body were 1.24 and 1.23, respectively. The solid polymer fuel cell assembly and solid polymer fuel cell evaluation were the same as in Example 1. The value of the current density was measured when the voltage of the solid polymer fuel cell reached 0.4 V, giving a value of 1.53 A/$cm^2$ as shown in Table 1.

(Comparative Example 1)

A laminated body was fabricated in the same manner as Example 1, except that separate gaskets (trade name: SB50A1P by Kureha Corp., thicknesses (C1 and C2): 250 μm) were used instead of the cathode side gasket and anode side gasket in Example 1. The X and Y values of the laminated body were 1.03 and 1.01, respectively. A solid polymer fuel cell was fabricated and evaluated in the same manner as Example 1. As a result, the value for the current density at a voltage of 0.4 V was 1.27 A/$cm^2$.

(Comparative Example 2)

A laminated body was fabricated in the same manner as Example 2, except that separate gaskets (trade name: SB50A1P by Kureha Corp., thicknesses (C1 and C2): 250 μm) were used instead of the cathode side gasket and anode side gasket in Example 2. The X and Y values of the laminated body were 1.05 and 1.03, respectively. A solid polymer fuel cell was fabricated and evaluated in the same manner as Example 2. As a result, the value for the current density at a voltage of 0.4 V was 0.55 A/$cm^2$.

The solid polymer fuel cells of Example 1 and Example 2 had higher current density and exhibited higher high electric power generation properties than the solid polymer fuel cells of Comparative Example 1 and Comparative Example 2.

(Example 3)

A laminated body was fabricated in the same manner as Example 1, except that separate gaskets (trade name: F8034-14 by Flon Industry, thicknesses (C1 and C2): 180 μm) were used instead of the cathode side gasket and anode side gasket in Example 1. The X and Y values of the laminated body were 1.43 and 1.41, respectively. The solid polymer fuel cell assembly and solid polymer fuel cell evaluation were the same as in Example 1. The value for the current density at a voltage of 0.4 V was 1.78 A/$cm^2$, as shown in Table 1.

(Example 4)

<Production of catalyst ink 4>

To 9.45 g of the commercially available 5 wt% Nafion$^R$ solution used for production of catalyst ink 1 there was added 1.50 g of platinum-supporting carbon with the platinum supported at 50.0 wt% (trade name: SA50BK by N.E. Chemcat), and then 82.60 mL of ethanol and 9.64 g of water were further added. The obtained mixture was subj ected to ultrasonic treatment for 1 hour and then stirred for 6 hours with a stirrer to obtain catalyst ink 4.

<Fabrication of laminated body, and assembly and evaluation of solid polymer fuel cell>

A laminated body was fabricated in the same manner as Example 1, except that catalyst ink 4 was used instead of catalyst ink 1 that was used to fabricate the anode catalyst layer and cathode catalyst layer in Example 1, and a Nafion$^R$ membrane (trade name: NRE211CS by DuPont Corp.) was used instead of a hydrocarbon-based polymer electrolyte membrane. The thickness (A2) of the anode catalyst layer was 15.0 μm, the thickness (A1) of the cathode catalyst layer was 25.0 μm, and the X and Y values of the laminated body were 1.31 and 1.26, respectively. The solid polymer fuel cell assembly and solid polymer fuel cell evaluation were the same as in Example 1. The value of the current density was measured when the voltage of the solid polymer fuel cell reached 0.4 V, giving a value of 1.99 A/$cm^2$ as shown in Table 1.

(Example 5)

<Production of catalyst ink 5>

To 2.27 g of the 5 wt% Nafion$^R$ solution used for production of catalyst ink 1 there was added 0.60 g of platinum-supporting carbon with the platinum supported at 68.3 wt% (trade name: C1-70 by E-TEK), and then 26.19 g of ethanol

and 3.88 g of water were further added. The obtained mixture was subjected to ultrasonic treatment for 1 hour and then stirred for 6 hours with a stirrer to obtain catalyst ink 5.

<Fabrication of laminated body, and assembly and evaluation of solid polymer fuel cell>

A laminated body was fabricated in the same manner as Example 1, except that catalyst ink 5 was used instead of catalyst ink 1 that was used to fabricate the anode catalyst layer and cathode catalyst layer in Example 1, and 0.60 mg/cm$^2$ of platinum was situated in the anode catalyst layer. The thickness (A2) of the anode catalyst layer was 18.0 μm, the thickness (A1) of the cathode catalyst layer was 15.0 μm, and the X and Y values of the laminated body were 1.26 and 1.28, respectively. The solid polymer fuel cell assembly and solid polymer fuel cell evaluation were the same as in Example 1. The value of the current density was measured when the voltage of the solid polymer fuel cell reached 0.4 V, giving a value of 1.84 A/cm$^2$ as shown in Table 1.

(Comparative Example 3)

<Fabrication of laminated body, and assembly and evaluation of solid polymer fuel cell>

A laminated body was fabricated in the same manner as Example 5, except that separate gaskets (trade name: SB50A1P by Kureha Corp., thicknesses (C1 and C2): 250 μm) were used instead of the cathode side gasket and anode side gasket in Example 5. The thickness (A2) of the anode catalyst layer was 18.0 μm, the thickness (A1) of the cathode catalyst layer was 15.0 μm, and the X and Y values of the laminated body were 1.06 and 1.07, respectively. The solid polymer fuel cell assembly and solid polymer fuel cell evaluation were the same as in Example 1. As a result, the value of the current density was measured when the voltage of the solid polymer fuel cell reached 0.4 V, giving a value of 1.26 A/cm$^2$.

(Example 6)

<Production of catalyst ink 6>

To 6 mL of the 5 wt% Nafion$^R$ solution used for production of catalyst ink 1 there was added 1.00 g of platinum-supporting carbon with the platinum supported at 50 wt% (trade name: SA50BK by N.E. Chemcat), and then 13.2 mL of ethanol and 3.77 g of the polymer electrolyte emulsion of polymer electrolyte 3 produced in Example 2 were further added to obtain a mixture. The obtained mixture was subjected to ultrasonic treatment for 1 hour and then stirred for 5 hours with a stirrer to obtain catalyst ink 6.

<Fabrication of laminated body>

A laminated body was fabricated in the same manner as Example 1, except that catalyst ink 6 was used instead of catalyst ink 1 that was used to fabricate the anode catalyst layer and cathode catalyst layer in Example 1, and 0.60 mg/cm$^2$ of platinum was situated in the anode catalyst layer. The thickness (A2) of the anode catalyst layer was 22.0 μm, the thickness (A1) of the cathode catalyst layer was 22.0 μm, and the X and Y values of the laminated body were 1.30 and 1.30, respectively.

<Assembly of solid polymer fuel cell, and evaluation of solid polymer fuel cell>

The solid polymer fuel cell assembly and solid polymer fuel cell evaluation were the same as in Example 1. The value of the current density was measured when the voltage of the solid polymer fuel cell reached 0.4 V, giving a value of 1.87 A/cm$^2$ as shown in Table 1.

The durability of the solid polymer fuel cell was then evaluated by the following method. The fabricated solid polymer fuel cell was kept at 95°C while slightly humidified hydrogen (70 mL/min, back pressure: 0.1 MPaG) and air (174 mL/min, back pressure: 0.05 MPaG) were each introduced into the cells for a load change test with an open circuit and constant current. The solid polymer fuel cell was operated continuously for 500 hours under these conditions. Next, the membrane-electrode assembly was removed out of the solid polymer fuel cell and placed in an ethanol/water mixture (ethanol content: 90 wt%), and the anode catalyst layer and cathode catalyst layer were also removed by ultrasonic treatment.

The weight-average molecular weight of the hydrophilic segment of the polymer electrolyte membrane after removal of the catalyst layer was measured in the following manner. First, 10 μL of a 25 wt% methanol solution of tetramethylammonium hydroxide was prepared for 4 mg of polyarylene-based block copolymer in the polymer electrolyte

membrane. The polymer electrolyte membrane was immersed in the methanol solution and reacted at 100°C for 2 hours. After standing to cool, the weight-average molecular weight of the obtained reaction mixture was measured by gel permeation chromatography (GPC). The measuring conditions for GPC were as follows.

- Column type (number): TSK gel GMHHHR-M by TOSOH (1)
- Column temperature: 40°C
- Mobile phase solvent: N,N-dimethylformamide (with addition of LiBr to LiBr concentration of 10 mmol/$dm^3$)
- Solvent flow rate: 0.5 mL/min

The weight-average molecular weight of each hydrophilic segment before the load change test and after the load change test, and the maintenance factor for the weight-average molecular weight of the polymer electrolyte membrane after the load change test with respect to before the load change test, are shown in Table 1. A higher maintenance factor indicates less deterioration of the polymer electrolyte membrane.

(Comparative Example 4)

<Fabrication of laminated body, and assembly and evaluation of solid polymer fuel cell>

A laminated body was fabricated in the same manner as Example 6, except that separate gaskets (trade name: SB50A1P by Kureha Corp., thicknesses (C1 and C2): 250 μm) were used instead of the cathode side gasket and anode side gasket in Example 6. The thickness (A2) of the anode catalyst layer was 22.0 μm, the thickness (A1) of the cathode catalyst layer was 22.0 μm, and the X and Y values of the laminated body were 1.09 and 1.09, respectively.

<Assembly of solid polymer fuel cell, and evaluation of solid polymer fuel cell>

A solid polymer fuel cell was assembled and the solid polymer fuel cell was evaluated, in the same manner as Example 6. The value of the current density was measured when the voltage of the solid polymer fuel cell reached 0.4 V, giving a value of 1.68 A/l$cm^2$ as shown in Table 1. The weight-average molecular weight of each hydrophilic segment before the load change test and after the load change test, and the maintenance factor for the weight-average molecular weight of the polymer electrolyte membrane after the load change test with respect to before the load change test, are shown in Table 1.

[Table 1]

| | Cathode catalyst layer side | | | | Anode catalyst layer side | | | | Evaluation 1 | Evaluation 2 | | |
|---|---|---|---|---|---|---|---|---|---|---|---|---|
| | Catalyst diffusion layer thickness A1 μm | Gas diffusion layer thickness B1 μm | Gasket thickness C1 μm | X *1 | Catalyst diffusion layer thickness A2 μm | Gas diffusion layer B2 μm | Gasket thickness C2 μm | Y *2 | Current density *3 A/cm$^2$ | Weight-average molecular weight (before test) | Weight-average molecular weight (after test) | Molecular weight maintenance factor |
| Example 1 | 7.3 | 250 | 210 | 1.23 | 3.3 | 250 | 210 | 1.21 | 1.81 | - | - | - |
| Example 2 | 11.3 | 250 | 210 | 1.24 | 8.5 | 250 | 210 | 1.23 | 1.53 | - | - | - |
| Comp. Ex. 1 | 7.3 | 250 | 250 | 1.03 | 3.3 | 250 | 250 | 1.01 | 1.27 | - | - | - |
| Comp. Ex. 2 | 11.3 | 250 | 250 | 1.05 | 8.5 | 250 | 250 | 1.03 | 0.55 | - | - | - |
| Example 3 | 7.3 | 250 | 180 | 1.43 | 3.3 | 250 | 180 | 1.41 | 1.78 | - | - | - |
| Example 4 | 25.0 | 250 | 210 | 1.31 | 15.0 | 250 | 210 | 1.26 | 1.99 | - | - | - |
| Example 5 | 15.0 | 250 | 210 | 1.26 | 18.0 | 250 | 210 | 1.28 | 1.84 | - | - | - |
| Comp. Ex. 3 | 15.0 | 250 | 250 | 1.06 | 18.0 | 250 | 250 | 1.07 | 1.26 | - | - | - |
| Example 6 | 22.0 | 250 | 210 | 1.30 | 22.0 | 250 | 210 | 1.30 | 1.87 | $1.21\times10^5$ | $8.10\times10^4$ | 67% |
| Comp. Ex. 4 | 22.0 | 250 | 250 | 1.09 | 22.0 | 250 | 250 | 1.09 | 1.68 | $1.21\times10^5$ | $4.63\times10^4$ | 38% |

*1: X is the value calculated by the following formula: X = (A1+B1)/C1
*2: Y is the value calculated by the following formula: Y = (A2+B2)/C2
*3: The value at a voltage of 0.4V.

According to the results shown in Table 1, excellent electric power generation properties and durability were confirmed for the solid polymer fuel cells in which the thicknesses of the cathode side gas diffusion layer, cathode catalyst layer and cathode side gasket and the anode side gas diffusion layer, anode catalyst layer and anode side gasket, used to fabricate the laminated body, satisfied the relationship specified by formulas (1) and (2) above.

## Industrial Applicability

According to the invention it is possible to provide a solid polymer fuel cell with sufficiently excellent electric power generation properties and durability, as well as a membrane-electrode-gas diffusion layer-gasket assembly to be used in the solid polymer fuel cell and a method for producing it.

## Claims

1. A method for producing a membrane-electrode-gas diffusion layer-gasket assembly having a cathode side gas diffusion layer, a cathode catalyst layer, a hydrocarbon-based polymer electrolyte membrane, an anode catalyst layer and an anode side gas diffusion layer laminated in that order, the method comprising:

   a cathode sealing step in which a cathode side gasket is formed on the edges of the cathode side gas diffusion layer and the cathode catalyst layer; and
   an anode sealing step in which an anode side gasket is formed on the edges of the anode side gas diffusion layer and the anode catalyst layer,
   wherein the thickness C1 of the cathode side gasket used in the cathode sealing step is in the following relationship with A1 as the thickness of the cathode catalyst layer and B1 as the thickness of the cathode side gas diffusion layer.

$$(A1+B1)/C1 \geq 1.2 \qquad (1)$$

2. A method for producing a membrane-electrode-gas diffusion layer-gasket assembly having a cathode side gas diffusion layer, a cathode catalyst layer, a hydrocarbon-based polymer electrolyte membrane, an anode catalyst layer and an anode side gas diffusion layer laminated in that order, the method comprising:

   a cathode sealing step in which a cathode side gasket is formed on the edges of the cathode side gas diffusion layer and the cathode catalyst layer; and
   an anode sealing step in which an anode side gasket is formed on the edges of the anode side gas diffusion layer and the anode catalyst layer,
   wherein the thickness C2 of the anode side gasket used in the anode sealing step is in the following relationship with A2 as the thickness of the anode catalyst layer and B2 as the thickness of the anode side gas diffusion layer.

$$(A2+B2)/C2 \geq 1.2 \qquad (2)$$

3. The method for producing a membrane-electrode-gas diffusion layer-gasket assembly according to claim 1, wherein the thickness C2 of the anode side gasket used in the anode sealing step is in the following relationship with A2 as the thickness of the anode catalyst layer and B2 as the thickness of the anode side gas diffusion layer.

$$(A2+B2)/C2 \geq 1.2 \qquad (3)$$

4. The method for producing a membrane-electrode-gas diffusion layer-gasket assembly according to any one of claims 1 to 3, wherein the hydrocarbon-based polymer electrolyte membrane comprises a block copolymer that includes a block composed of a repeating unit with an ion-exchange group, and a block composed of a repeating unit with essentially no ion-exchange groups.

**5.** The method for producing a membrane-electrode-gas diffusion layer-gasket assembly according to any one of claims 1 to 3, wherein at least one of the cathode catalyst layer and the anode catalyst layer contains a hydrocarbon-based polymer electrolyte.

**6.** The method for producing a membrane-electrode-gas diffusion layer-gasket assembly according to any one of claims 1 to 3, wherein at least one of the cathode catalyst layer and the anode catalyst layer is formed using a catalyst ink comprising a catalyst substance, a solvent and a polymer electrolyte, wherein at least a portion of the polymer electrolyte particles is present in a dispersed state in the solvent.

**7.** The method for producing a membrane-electrode-gas diffusion layer-gasket assembly according to claim 6, wherein at least one of the cathode catalyst layer and the anode catalyst layer is formed by directly coating the catalyst ink onto the hydrocarbon polymer electrolyte membrane by a spray method.

**8.** A membrane-electrode-gas diffusion layer-gasket assembly produced by the method according to any one of claims 1 to 3.

**9.** The membrane-electrode-gas diffusion layer-gasket assembly according to claim 8, wherein at least one of the cathode catalyst layer and the anode catalyst layer contains a hydrocarbon-based polymer electrolyte.

**10.** A solid polymer fuel cell comprising the membrane-electrode-gas diffusion layer-gasket assembly according to claim 8.

**11.** The method for producing a membrane-electrode-gas diffusion layer-gasket assembly according to any one of claims 1 to 3, further comprising a cathode side gasket-bonding step wherein the cathode side gasket provided in the cathode sealing step is pressed in the direction of lamination and contact bonded with the hydrocarbon-based polymer electrolyte membrane.

**12.** The method for producing a membrane-electrode-gas diffusion layer-gasket assembly according to any one of claims 1 to 3, further comprising an anode side gasket-bonding step wherein the anode side gasket provided in the anode sealing step is pressed in the direction of lamination and contact bonded with the hydrocarbon-based polymer electrolyte membrane.

**13.** The method for producing a membrane-electrode-gas diffusion layer-gasket assembly according to any one of claims 1 to 3, further comprising:

a cathode side gasket-bonding step wherein the cathode side gasket provided in the cathode sealing step is pressed in the direction of lamination and contact bonded with the hydrocarbon-based polymer electrolyte membrane; and
an anode side gasket-bonding step wherein the anode side gasket provided in the anode sealing step is pressed in the direction of lamination and contact bonded with the hydrocarbon-based polymer electrolyte membrane.

**14.** A method for improving the durability of a membrane-electrode-gas diffusion layer-gasket assembly having a cathode side gas diffusion layer, a cathode catalyst layer, a hydrocarbon-based polymer an electrolyte membrane, an anode catalyst layer and an anode side gas diffusion layer laminated in that order, the method comprising:

a cathode sealing step in which a cathode side gasket is formed on the edges of the cathode side gas diffusion layer and the cathode catalyst layer, the thickness C1 of the cathode side gasket is in the following relationship with A1 as the thickness of the cathode catalyst layer and B1 as the thickness of the cathode side gas diffusion layer,

$$(A1+B1)/C1 \geq 1.2 \qquad (1);$$

and
an anode sealing step in which an anode side gasket is formed on the edges of the anode side gas diffusion layer and the anode catalyst layer, the thickness C2 of the anode side gasket is in the following relationship with A2 as the thickness of the anode catalyst layer and B2 as the thickness of the anode side gas diffusion layer,

$$(A2+B2)/C2 \geq 1.2 \qquad (2).$$

*Fig.1*

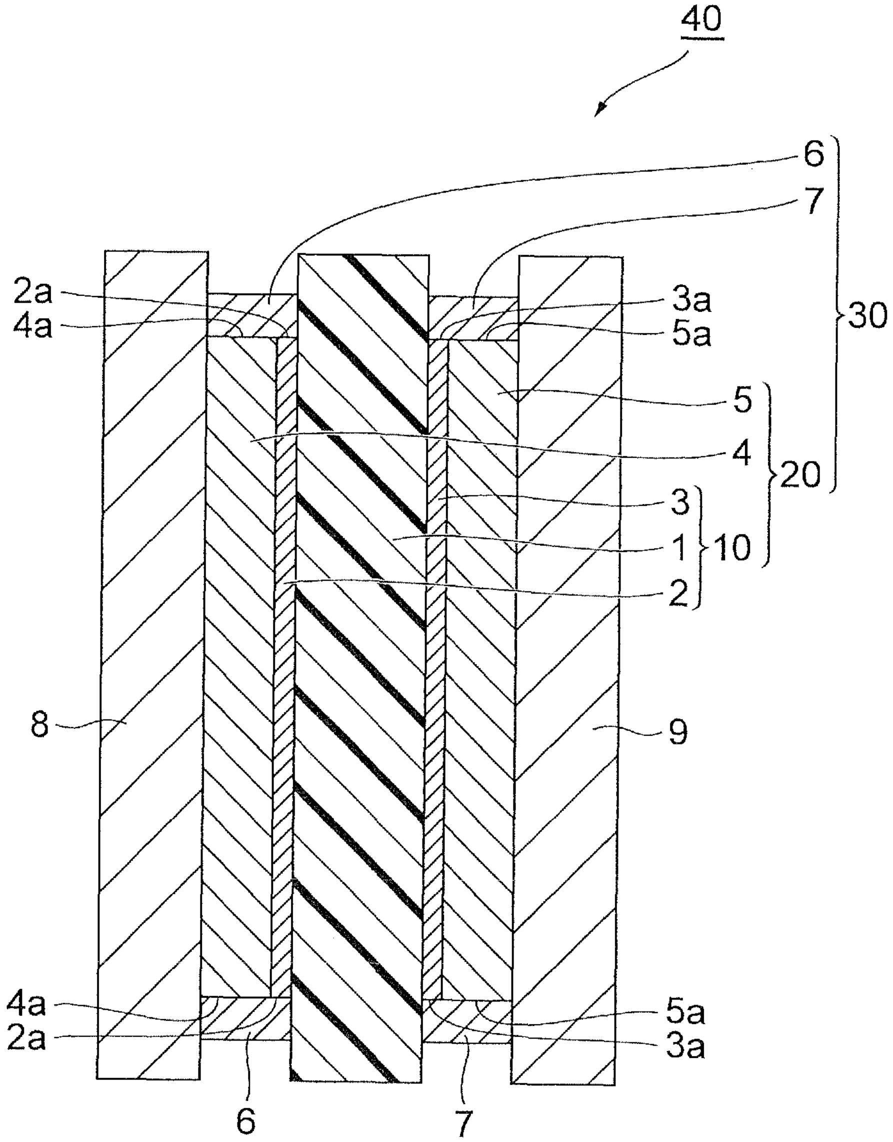

Fig.2

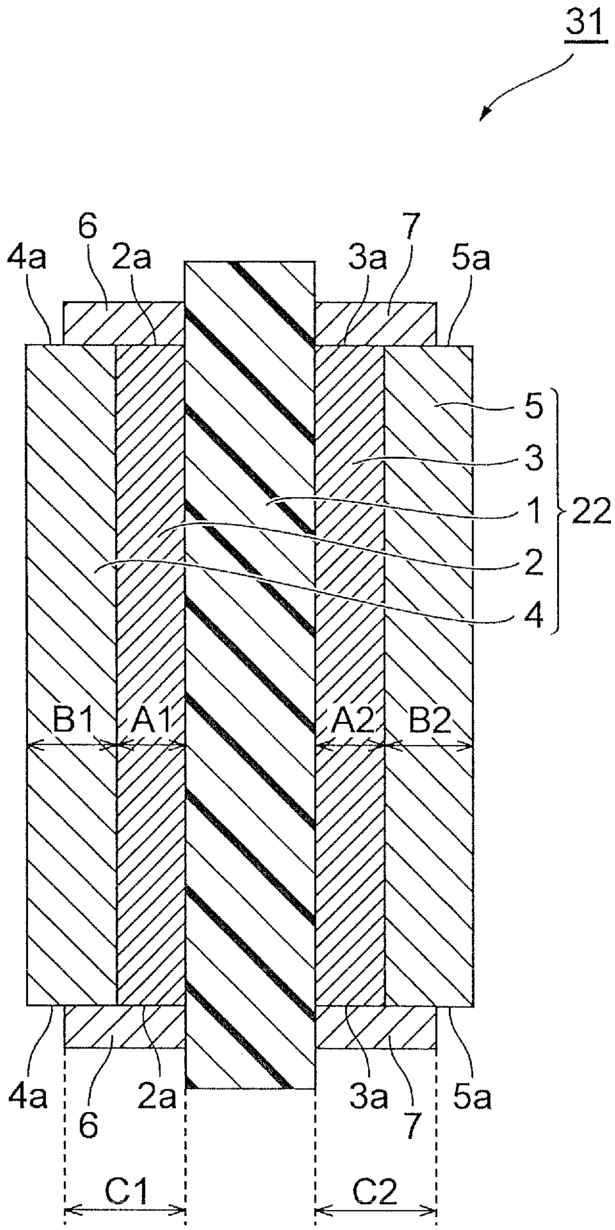

*Fig.3*

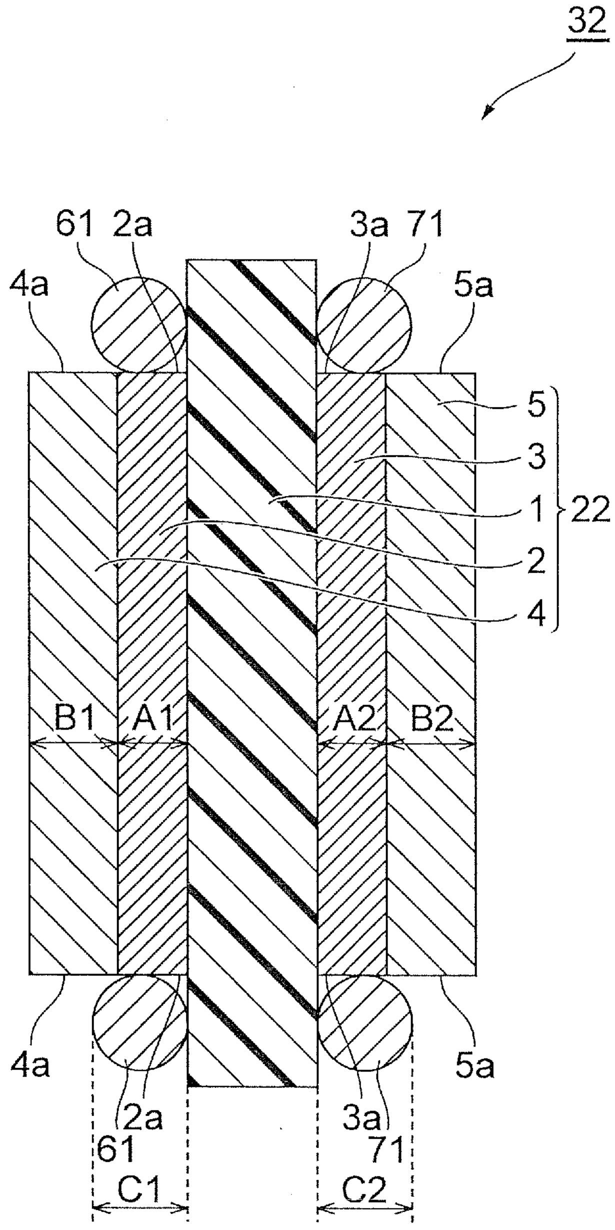

*Fig.4*

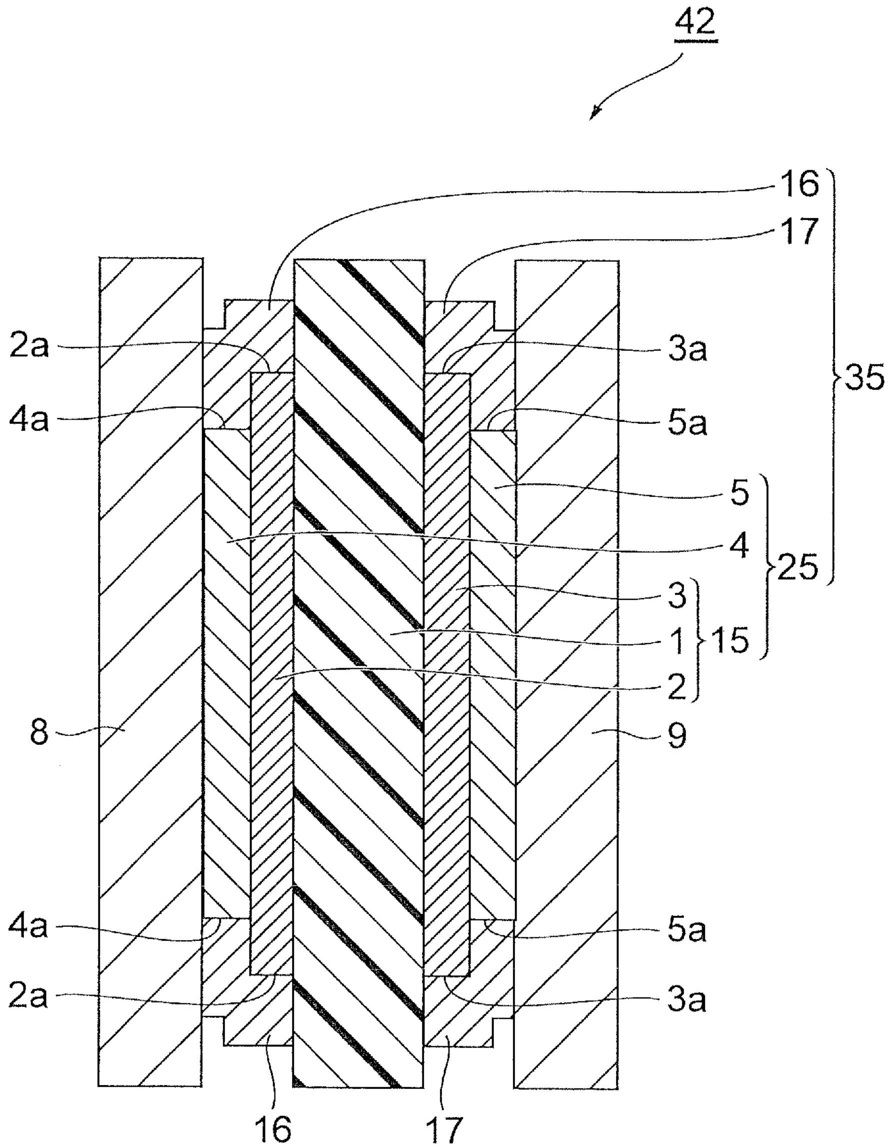

*Fig.5*

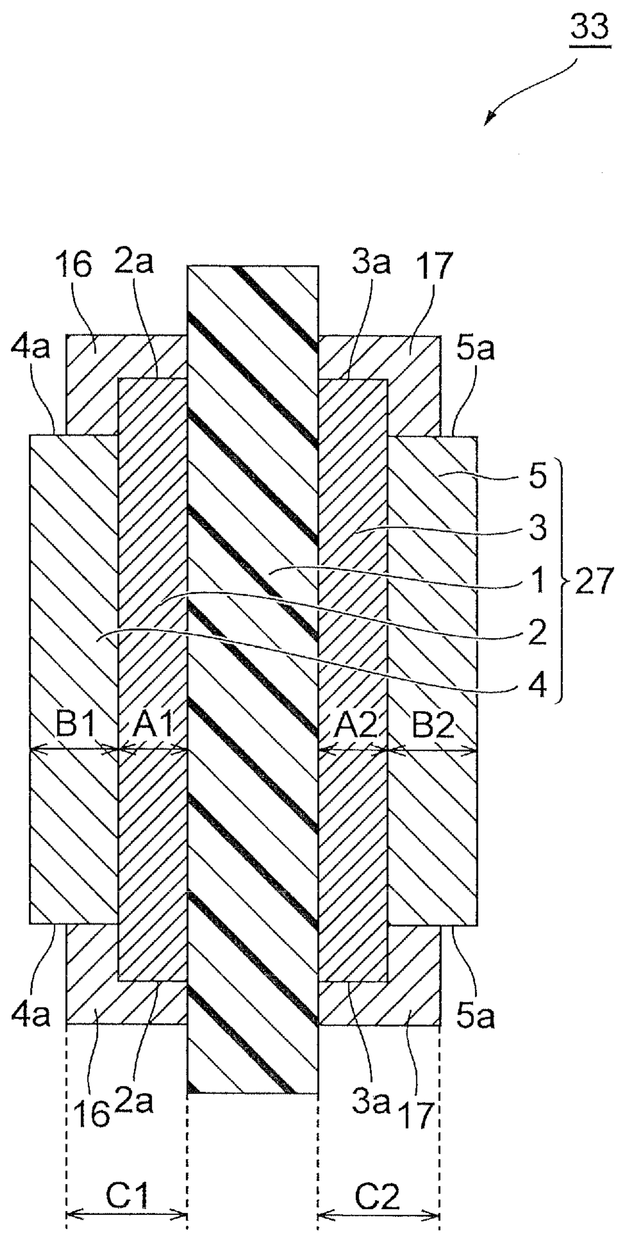

Fig.6

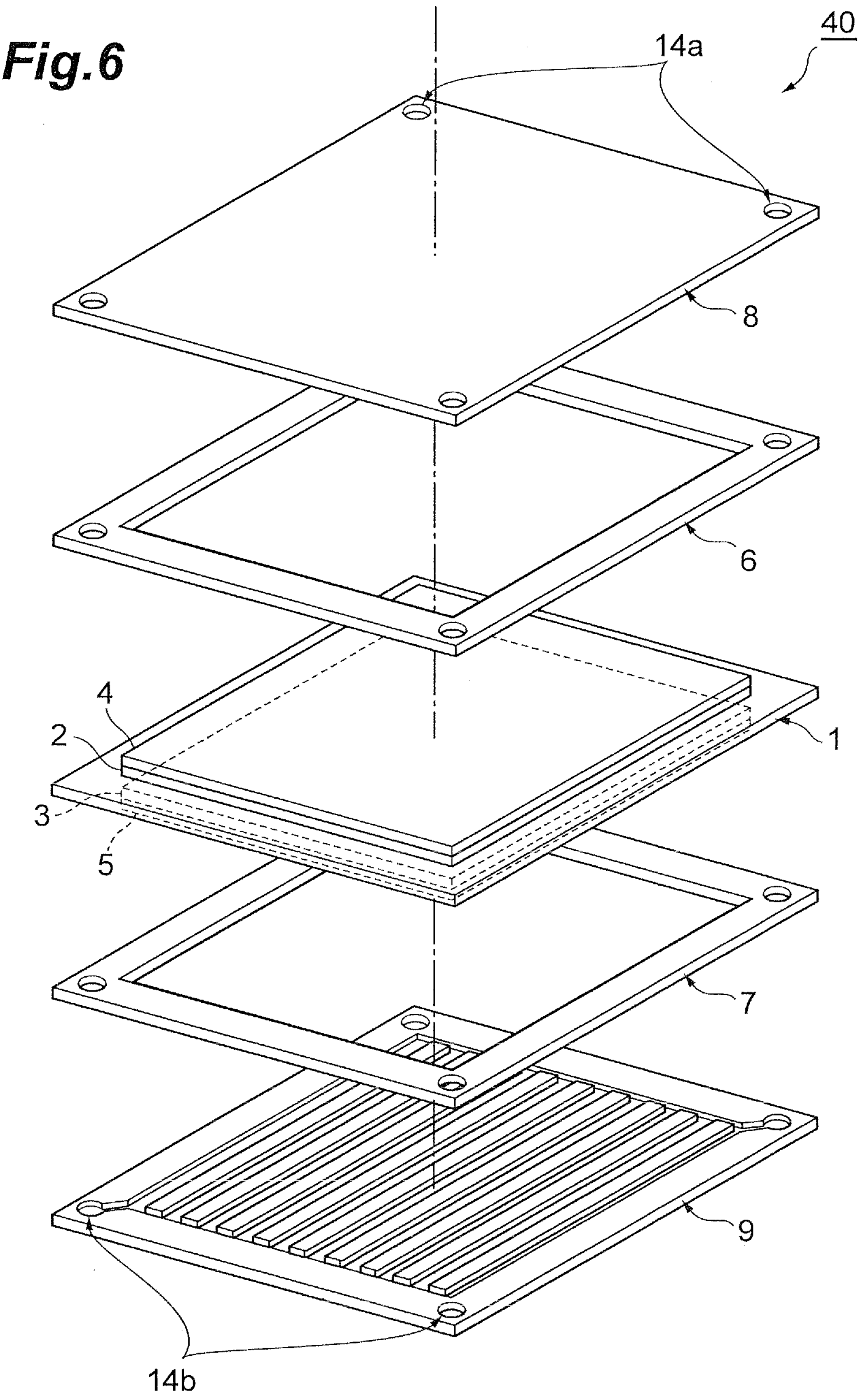

**INTERNATIONAL SEARCH REPORT**

International application No.
PCT/JP2008/060896

A. CLASSIFICATION OF SUBJECT MATTER
*H01M8/02*(2006.01)i, *H01M4/86*(2006.01)i, *H01M4/88*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, H01M4/86, H01M4/88, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-324556 A (Kaneka Corp.),<br>08 November, 2002 (08.11.02),<br>Claims; Par. Nos. [0012] to [0015], [0020], [0021], [0025] to [0036]; Fig. 2<br>(Family: none) | 1-3,8,10,14<br>4-7,9,11-13 |
| Y<br>A | JP 2003-31232 A (Ube Industries, Ltd.),<br>31 January, 2003 (31.01.03),<br>Claims<br>& WO 2002/091507 A1 & EP 1394879 A1<br>& US 2004/101730 A1 | 4<br>1-3,5-14 |
| Y<br>A | JP 2005-139432 A (Sumitomo Chemical Co., Ltd.),<br>02 June, 2005 (02.06.05),<br>Claims<br>& WO 2005/0037892 A1 & EP 1674498 A1<br>& US 2007/066759 A1 | 4<br>1-3,5-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 August, 2008 (12.08.08) | 26 August, 2008 (26.08.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/060896

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2007-95669 A (Nissan Motor Co., Ltd.), 12 April, 2007 (12.04.07), Par. Nos. [0016] to [0020], [0057], [0068] to [0072], [0075] to [0077], [0086] to [0092]; Fig. 1<br>& WO 2007/0026797 A1 | 5,9<br>1-4,6-8, 10-14 |
| Y<br>A | JP 2007-66769 A (Nissan Motor Co., Ltd.), 15 March, 2007 (15.03.07), Par. Nos. [0101] to [0103]<br>& WO 2007/0026546 A1 | 6,7<br>1-5,8-14 |
| Y<br>A | JP 2005-158690 A (Mitsubishi Electric Corp.), 16 June, 2005 (16.06.05), Par. Nos. [0032], [0038]; Fig. 6<br>& US 2005/123819 A1 | 11-13<br>1-10,14 |
| Y<br>A | JP 2005-100970 A (Matsushita Electric Industrial Co., Ltd.), 14 April, 2005 (14.04.05), Par. Nos. [0042] to [0046]<br>& EP 1511103 A2 & US 2005/084734 A1 | 11-13<br>1-10,14 |
| A | JP 2003-257469 A (OMG AG & Co., KG), 12 September, 2003 (12.09.03), Par. Nos. [0058] to [0075]; Fig. 1<br>& EP 1341251 A1 & US 2003/175575 A1 | 1-14 |
| A | JP 2007-66768 A (Nissan Motor Co., Ltd.), 15 March, 2007 (15.03.07), Full text<br>(Family: none) | 1-14 |
| A | JP 2006-502548 A (General Motors Corp.), 19 January, 2006 (19.01.06), Par. No. [0012]<br>& US 2004/067407 A1 & WO 2004/0034501 A2 | 1-14 |
| A | JP 2005-216525 A (JSR Corp.), 11 August, 2005 (11.08.05), Claims; Par. Nos. [0023] to [0045]<br>(Family: none) | 1-14 |

Form PCT/ISA/210 (continuation of second sheet) (April 2007)

**INTERNATIONAL SEARCH REPORT**

International application No.
PCT/JP2008/060896

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

There must exist a special technical feature so linking a group of inventions of claims as to form a single general inventive concept in order that the group of inventions may satisfy the requirement of unity of invention. The group of inventions of claims 1, 3-13 and respective inventions of claim 2 and claim 14 are linked only by the technical feature of "(thickness of catalyst layer + thickness of gas diffusion layer)/thickness of gasket ≥ 1.2" in view of definitions of the claims.

This technical feature, however, cannot be a special technical feature since it is disclosed in prior art document JP 2002-324556 A (Kaneka Corp.), 08 November, 2002 (08.11.02) and the like. (Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

INTERNATIONAL SEARCH REPORT

International application No.
PCT/JP2008/060896

Continuation of Box No.III of continuation of first sheet(2)

Consequently, it is obvious that the group of inventions of claims 1, 3-13, the invention of claim 2 and the invention of claim 14 do not satisfy the requirement of unity of invention and this international application contains two or more inventions.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001319663 A
- JP 2002289230 A
- JP 9110982 A
- JP 11116679 A
- JP 11503262 A
- JP 2005126684 A
- JP 2005139432 A
- WO 2006095919 A
- JP 2003282096 A
- JP 2004089976 A
- JP 7312223 A
- JP 2001155745 A


### Non-patent literature cited in the description


- *J. Appl. Polym. Sci.,* 1974, vol. 18, 69
- *Polymer Prep.,* 2000, vol. 41 (1), 70